Europäisches Patentamt

European Patent Office

Office européen des brevets

(19)

(11) **EP 0 724 150 B1**

(12) **EUROPEAN PATENT SPECIFICATION**

(45) Date of publication and mention
of the grant of the patent:
**08.05.2002 Bulletin 2002/19**

(51) Int Cl.⁷: **G01N 23/04**, G21K 1/06

(86) International application number:
**PCT/RU94/00189**

(21) Application number: **94927878.2**

(22) Date of filing: **11.08.1994**

(87) International publication number:
**WO 96/01991 (25.01.1996 Gazette 1996/05)**

(54) **DEVICE FOR OBTAINING AN IMAGE OF AN OBJECT USING A STREAM OF NEUTRAL OR CHARGED PARTICLES AND A LENS FOR CONVERTING THE SAID STREAM OF NEUTRAL OR CHARGED PARTICLES**

VORRICHTUNG ZUR ERZEUGUNG EINES BILDES VON EINEM OBJEKT UNTER DER VERWENDUNG EINES STROMES VON NEUTRALEN ODER GELADENEN TEILCHEN UND EINER LINSE ZUM KONVERTIERTEN DES STROMES VON NEUTRALEN ODER GELADENEN TEILCHEN

DISPOSITIF D'OBTENTION D'UNE IMAGE D'UN OBJET UTILISANT UN COURANT DE PARTICULES NEUTRES OU CHARGEES ET UNE LENTILLE DE CONVERSION DUDIT COURANT DE PARTICULES NEUTRES OU CHARGEES

(84) Designated Contracting States:
**DE FR GB IT NL SE**

(43) Date of publication of application:
**31.07.1996 Bulletin 1996/31**

(73) Proprietor: **Kumakhov, Muradin Abubekirovich**
**Moscow, 123103 (RU)**

(72) Inventor: **Kumakhov, Muradin Abubekirovich**
**Moscow, 123103 (RU)**

(74) Representative: **Patentanwälte**
**Zellentin & Partner**
**Zweibrückenstrasse 15**
**80331 München (DE)**

(56) References cited:
**WO-A-92/08235**          **WO-A-92/09088**
**DE-A- 1 803 806**       **DE-A- 2 461 877**

• **DATABASE WPI Section Ch, Week 8732 Derwent Publications Ltd., London, GB; Class K08, AN 87-227130 XP002013709 & SU-A-1 278 692 (GLUSHANOK YU B) , 23 December 1986**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Technical Field

The present invention relates to means for imaging an object by radiation methods when studying an object or forming a pattern corresponding to the structure of a preset-configuration object, and to means for controlling the flux of neutral or charged particles, namely, for bending the beams of such particles, focusing said beams, transforming a diverging radiation into a quasi-parallel one, and vice versa, filtration and monochromatization of said radiation, separation of particles differing in energy, etc. both during the process for producing the image of an object and when solving other problems encountered in medicine, nuclear physics, etc.

Background Art

Known in the art are methods for studying various objects involving formation of an image of their structure by exposure of the objects to the effect of a flux of neutral or charged particles (neutrons, electrons, gamma-quanta, X-rays, etc.), and registering the distribution of the radiation intensity resulting from interaction with the object. The thus-formed image is interpreted as the distribution of interaction properties between the object and the radiation used, said properties being inherent in the various elements of the object, in particular, as a two-dimensional projection of a spatial distribution of attenutaion of the radiation resultant from its transmission through the object (cf. the textbook "Production automation and industrial electronics", Moscow,Sovetskaya entsiklopediya PH, 1954, v.3, p.277; v.1, p.209 (in Russian).

Similar methods are also known to be used in electronic, X-ray, and other lithography for forming a preset pattern corresponding to a known structure of a specially made object (i.e. stencil, mask); cf., e.g.,"Electronics: An encyclopedic dictionary", Moscow, Sovetskaya entsiklopediya PH, 1991, pp.254 - 255 (in Russian).

The aforediscussed methods are carried into effect using devices, comprising a radiation source, a means for placing an object with a possibility of being exposed to the radiation, and a means for image recording, sensitive to a radiation resulting from interaction of the source-emitted radiation and the object.

However, capabilities of said methods are very much limited unless use is made of means for controlling a primary particle flux or a flux resulting from interaction with the object, in particular, for controlling the spectrum, direction, width, divergence, and other beams parameters.

Some prior-art radiation methods for producing the image of an object are known to use the concept described before and to be carried into effect with the aid of devices, comprising, apart from said means, also optical elements capable of solving some of the problems mentioned before, in particular, controlling the beam width and selecting the particles that have deviated from a preset direction (cf. "Physics of image visualization in medicine", edited by S.Webb, the Russian translation published in Moscow, Mir PH, 1991, pp. 41, 101, 134). Setting aside the fact that the problems thus solved bear a specific nature, it is also worth noting that the concepts used in said methods involve the use of a radiation source having surplus intensity.

Use of other types of optics in the devices of the character discussed herein is dealt with in the symposium "X-ray optics and microscopy", edited by G. Schmahl and D.Rudolph, Moscow, Mir PH, 1987, wherein there are considered, in particular, use of Fresnel zone plates for beam focusing (p.87), and grazing-incidence mirror optics (p.174). However, Fresnel zone plates are characterized, due to the specific features of the physical concept applied, by an extremely high selectivity as for particle energy (wavelength), for which reason said plates cannot be used for controlling a broad-spectrum radiation. In addition, as it is noticed in said symposium, said plates should have a very small size and the devices making use of said plates feature a small angular aperture and a low aperture ratio. As far as said mirror optics is concerned, said optics, though having practically acceptable geometric dimensions, is capable, as a rule, of only a single reflection, this being due to extremely low magnitudes of the angle of total external reflection effective for the radiations of the ranges under discussion. Thus, the devices that make use of such optics feature but restricted possibilities for controlling radiation beams, as well as an extremely small angular aperture which corresponds to too low magnitudes of the angle of total external reflection.

One more prior-art device for producing the image of an object (US Patent No.5,175,755 published December 29, 1991) is of a more perfect design. The device makes use, for controlling a radiation beam of an optical system which appears as a lens established by a set of channels having reflecting walls and adapted for radiation transport. A variety of modes of controlling a flux of particles are provided in a device having such an optical system, said modes being specified in said US Patent, in particular, transforming a divergent radiation into a quasi-parallel one before exposing the object to said radiation, transporting a broad-spectrum radiation in conjunction with a possibility of cutting-off the hard radiation component, and transforming the size of the resultant image.

US Patent No.5,192,869 published March 9, 1993 discloses the construction of a lens for transforming the flux of neutral or charged particles which is more perfect compared with the aforementioned means for controlling a flux of particles and is suitable for use as a component part of a device for producing the image of an object. The lens in question makes use of rigid supporting elements spaced some distances apart from one another lengthwise the length so as to provide a rigid fixing of the channel-forming elements at places where they pass through the holes in the supporting elements. An appropriately selected arrangement of said holes enables one to attain the correspondence of the axial lines of individual channels to the generating surfaces of a required shape. In order to meet the conditions of the radiation transport along the channels without a considerable loss, the cross-sectional dimensions of each individual channel must be as small as possible. However, the aforementioned construction involving the use of a mechanical assembly procedure sets limits on a minimum channel cross-sectional dimension. In particular, with radiation transport channels made as glass capillaries or polycapillaries having a diameter of the order of 300 microns, they loss their properties required for proper assembling. Thus, the capillaries or polycapillaries start "soaring" in the air, they cannot be given a required radius of curvature during assembling, and the capillaries are liable to sag between the point of support. Such a restriction for their diameter results in that the radiation cannot be focused into a spot having a diameter smaller the capillary inside diameter or the polycapillary outside diameter. The least focal spot diameter attainable with such lenses is 0.5 mm, which means that it is impossible to provide high concentration of radiation due to too a large focal spot diameter.

A finite size of the channels imposes limitation on the range of energies used. With a preset focal length f, even though the radiation source is a point-like one, a minimum angle of radiation incidence on the capillary peripheral zone is $\Theta = d/2f$, where d is the channel diameter.

To provide an efficient radiation transfer, it is desirable that the parameter $\Theta$ approximates or will even be less than the critical angle of reflection $\Theta_c$, because the critical angle decreases as the energy increases. This condition restricts the use of high energies in lenses of the first and second generations. For instance, with an X-ray energy E = 10 keV, radiation capture into the channel is not in excess of 15%, and with an increase in the focal length the capture angle decreases and hence the efficiency of the system decreases, too. It follows from all stated before that it is necessary to change over to radiation transfer channels having cross-sectional dimensions down to microns and submicrons, which is impossible, due to the aforementioned reasons, with the construction described before and involving the use of mechanical assembling during its manufacture. Mechanical assembling is causative of one more disadvantage. Angular divergence is determined by the expression: $\Delta\Theta = \Delta L/L$, where $\Delta L$ is the sum of variations of capillary diameter and the diameter of a hole in the support disk, L is the distance between the disks which is not to exceed 1 - 3 cm. With $\Delta L$ being about 10% of said diameters and the value of the latter of the order of 500 microns, $\Delta\Theta$ is of the order of $5 \cdot 10^{-3}$ rad. which proves to be inacceptable for many applications.

The aforedescribed device and lens as taught in US Patents No.5,175,755 and No.5,192,869, respectively are most closely pertinent to the herein-proposed ones. Their capabilities are restricted, apart from the factors mentioned before, also by the fact that there are utilized only the channelling properties of individual channels functioning independently of one another. In this case the wave properties of the particles being channelled are exhibited only when said particles are reflected from the channel walls during their transferring along said channels, this being due to the fact that no measures are taken in the lens construction for displaying the effect of interaction between particles after their having been transferred along the different channels. This limits the attainable degree of radiation concentration to a geometric accuracy of orientation of the channels towards a desired point, and also precludes energy separation of particles whenever it becomes necessary, and monochromatization of the radiation with the aid of the lens itself, without resorting to any other means. The restrictions stated above affect adversely the capabilities of the device for producing the image of an object which comprises an optical system in the form of a lens built up of a set of channels having reflecting walls, for radiation transfer; in particular, said restrictions precludes any increase in the resolution of the device, reduction of the radiation load the object under examination is exposed to, and use of a lower-power radiation source.

Disclosure of the Invention

As far as a device for producing the image of an object is concerned, the present invention is aimed at increasing the efficiency of utilization of a radiation in the form of a flux of neutral or charged particles for producing an image appearing as the distribution of intensity of the radiation after its interaction with the object. The obtained technical result resides in a higher resolution in conjunction with a reduced effect of radiation produced on the object accompanied by an increased intensity of radiation acting on the sensing elements (sensors) of an image forming means. The aforesaid factors acting jointly contribute to an extended range of media under examination and of those serving the carriers of the resultant image.

As far as a lens for converting a flux of neutral or charged particles is involved, the present invention is aimed at increasing an attainable degree of radiation concentration, including concentration of a radiation corresponding to different wavelengths of an input flux in various space regions. The construction of the lens proposed in the present invention overcomes the adverse effect of technological restrictions inherent in the known lens adopted as the prototype.

Furthermore, the device for producing the image of an object as set forth in claim 1 and the lens as set forth in claim 27 provide for some other kinds of technical advantages in a variety of particular cases of their embodiment and application, which are the subject of a detailed description that follows hereinbelow.

The herein-proposed device for producing the image of an object comprises, like the known device disclosed in US Patent No.5,175,755, a source of radiation in the form of a flux of neutral or charged particles, a means for arranging an object with a possibility of being exposed to the effect of radiation generated by said source, a means for image formation providing a possibility of recording the distribution of intensity of the radiation after its interaction with the object, and an optical system, which incorporates at least one lens aimed at converting a flux of particles and interposed between the radiation source and the means for placing the object, or between the latter means and the means for image formation, said lens being established by a set of channels for radiation transfer, having reflecting walls. Unlike the heretofore-known device, the herein-proposed device features all or part of the channels establishing the lens for converting the flux of particles, arranged orderly across the lens, observing axial symmetry.

In this case there may be observed, for all the channels arranged orderly across the lens, in particular, the condition of mirror symmetry with respect to one or two mutually perpendicular axes of said lens cross-section. An ordered arrangement of the channels observing a central or rotational symmetry with respect to the lens longitudinal axis is also possible.

It is the due observance of symmetry that makes possible a coherent interaction between equal-energy particles emitted by the radiation source and, after having passed through the lens, coming along various paths, at the same space point of convergence, as well as the onset of interference phenomena which lead ultimately to the aforementioned technical result.

A particle flux converting lens (or any of such lenses making part of the optical system if a number of the lenses are made use of) can be established by snugly positioned miniature lenses whose total cross-section is variable along the length of the lens in accordance with a required longitudinal profile thereof. Such a construction arrangement of the lens makes it possible to dispense with the need for use of supporting elements as means forming the longitudinal lens profile and determining the shape of the lens channels, and eliminates restrictions inherent in mechanical assembling involving the use such supporting elements.

An increased efficiency of radiation focusing which is the most important result of the aforedescribed embodiment of a lens (lenses) making part of the proposed device for producing the image of an object, promotes both higher resolution and radiation intensity in the zone of location of the image formation means high enough for the image to record, and also contributes to a lower intensity of radiation the object is exposed to.

The most efficient is such a device for producing the image of an object that makes use of a lens (lenses), wherein the channels arranged orderly across the lens in keeping with axial symmetry, are grouped together into similar modules which are arranged orderly across the lens in keeping with axial symmetry. Each of said modules (referred to as the first-level modules) may in turn be established by the second-level modules featuring the same shape, mutual arrangement, and number as the first-level modules. Accordingly, the second-level modules may be formed by the smaller third-level modules, and so on. Each of the highest-level modules may in fact be a miniature lens.

According to one of the groups of specific embodiments of the proposed device the image formation means is so arranged as to make it possible to transfer thereto the radiation that has passed through the object.

In one of such cases the optical system comprises a number of asymmetric lenses, each of which is capable of reducing the image being generated, said asymmetric lenses being interposed between the means for placing an object and the means for image formation in such a manner that each of said asymmetric lenses transfers the radiation from the object elements nearest to the lens entrance end, and all the asymmetric lenses makes it possible to produce a mosaic image of the object. Thanks to such an embodiment of the device the dose of radiation the object is exposed to is reduced in direct proportion to the degree of reduction of the image size and focusing the radiation emerging from asymmetric lenses.

According to another specific embodiment of said group, an optical system comprises an image-enlarging diverging hemilens interposed between the means for placing the object and the image forming means, said hemilens being made up of conical capillaries or polycapillaries. The radiation source may be positioned at the focal point of said diverging hemilens or on its optical axis in an out-of-focus position. In the latter case there is provided energy filtration of the captured particles. With the same purpose in view, when using a finite-size radiation source having an exit aperture shaped as a circle, the central portion of the latter can be shielded.

The optical system in the embodiments considered hereinbefore and characterized by the provision of a conical diverging hemilens for image enlarging may also comprise a second diverging hemilens made up of conical capillaries or polycapillaries and having a smaller size in cross-section as compared with the first one, said second hemilens being interposed between the radiation source and the means for placing the object. This feature enables one to produce an image having adequate dimensions and to reduce the object exposure dose.

In the aforedescribed particular cases the object is exposed to a directly diverging radiation generated by the source. According to one more specific embodiment, the optical system comprises a lens or hemilens for forming a quasi-parallel beam of particles, which is interposed between the radiation source and the means for placing the object.

A source of diverging radiation may be made with a possibility of forming two characteristic $K_\alpha$ spectral lines. In this case the optical system comprises also a rotary filter-window placed either before or after the lens oruhemilens aimed at forming a quasi-parallel beam. The filter-window incorporates two alternating sectors, each aimed at suppressing the radiation of either of the $K_\alpha$ spectral lines. The lens or hemilens mentioned above features its longitudinal axis having a bend aimed at cutting off the hard radiation component, or has a straight longitudinal axis, in which case a set of parallel capillaries is placed before the object in order to cut off the hard radiation component. Such being the case, there are formed periodically two images corresponding to the results of interaction between the object and the particles having the energy corresponding to said $K_\alpha$ spectral lines, thus providing prerequisites for forming a final image by subtracting one of said two images from the other, which makes it possible to enhance the degree of intelligence of said image due to suppression of the interfering background.

In a further particular case also characterized by the use of a diverging radiation source involving a possibility of forming two characteristic $K_\alpha$ spectral lines, the optical system comprises two lenses or hemilenses for forming quasi-parallel beams arranged at an angle to each other, and two crystals monochromators for discriminating, by each of them, either of the $K_\alpha$ spectral lines, said crystals being positioned past said lenses or hemilenses with a possibility of reflecting monochromatized beams towards the means for placing the object. The device comprises also a second means for image forming, each of the image forming means being located past the means for placing the object with a possibility of receiving the radiation reflected from one of the crystals monochromators after its having passed through the object. The device thus embodied is also capable of forming two images corresponding to different $K_\alpha$ spectral lines.

In a yet further particular embodiment of the device the optical system comprises a lens positioned between the radiation source and the means for placing the object, said lens being capable of focusing the radiation inside the object in order to produce the image of its element whereon focusing is carried out. In this case the radiation source, said lens, and the means for image forming are capable of a joint rotary motion with respect to the means for placing the object without affecting their mutual arrangement and that of the radiation focusing point, said point being the center of said rotary motion. Such a construction arrangement makes it possible to concentrate the radiation at the same element of the object throughout the entire observation time without irradiating, during said period of observation, the same elements surrounding the one under observation. It is due to said feature that said elements are exposed to radiation alternately, that is, during only a part of the observation time and at a lower radiation concentration than the element under observation.

According to another group of specific embodiments of the proposed device the image forming means is so positioned as to make possible transferring thereto the secondary radiation that has been either scattered or excited in the substance of the object as a result of interaction between said substance and the radiation generated by the source.

In one of said particular embodiments the radiation source is capable of forming a flux of electrons or ions for exciting a secondary X-ray radiation in the substance of the object, and the optical system comprises a hemilens adapted for transferring said secondary radiation to the image-forming means and being capable of scanning the object with its focal point.

In one more particular embodiment of said group the optical system comprises a lens for transferring the radiation generated by the source, to the object, and a lens for transferring the secondary radiation to the image forming means, both of said lenses having a common focal point and being jointly movable for scanning the object with their common focal point.

In both of the aforesaid particular embodiments a means for beam monochromatization may be interposed between the lens for transferring the secondary radiation to the image forming means and the latter means, said monochromatization means being provided, in particular, as a doubly curved crystal.

A polarizing target may be interposed between the lens for transferring the radiation to the means for placing the object and said means, said target being capable of changing the direction of the beam reflected therefrom by 90° with respect to the beam incident thereon. The polarizing target may be in the form of a crystal monochromator.

According to one of the particular embodiments of the device, wherein provision is made for confocal lenses of which one transfers radiation to the means for placing the object and the other transfers the secondary radiation therefrom, the latter lens may have radiation transfer channels symmetrical with respect to the optical axis and a focal point situated in the space between the lens exit end and the image forming means, a microaperture being provided in said space with a possibility of scanning the image of the object.

Such a construction arrangement enables the device to be used for an elementary analysis of a sample serving as an object. The device can thus be 'tuned' to a specific value of energy of the secondary-radiation particles by positioning the microaperture on the lens optical axis, said lens transferring the secondary radiation, with displacement out of focus corresponding to the energy E of the particles, by the following value:

$$\Delta f = f \frac{\Delta E}{E},$$

where

> f is the focal length corresponding to the energy E; and
>
> $\Delta E$ is the required resolution value with respect to the energy E.

In order to suppress a background developed by the second radiation with the energies that are of no interest, those areas of the lens cross-section over which the particles having such energies are mostly propagated can be closed on the lens exit with a circular (when the central lens portion is involved) or an annular (in the case of the lens layers removed from its axis) radiation-tight shield.

In a further particular embodiment which provides image producing with the aid of Compton radiation scattered by the object, the optical system comprises a lens positioned between the radiation source and the means for placing the object, and adapted for forming a quasi-parallel beam. In this case a collimator appearing as a system of straight capillaries, is interposed between the means for placing the object and the image forming means. The radiation source, the lens, the collimator, and the image forming means are situated in the same half-space with respect to the means for placing the object.

In a yet further embodiment, wherein the image of an object is produced with the aid of Compton radiation scattered by the inner elements of the object, the optical system comprises a lens interposed between the radiation source and the means for placing the object and adapted for focusing the radiation inside the object, and a collimator in the form of a system of conical capillaries, said collimator being focused at the same point as the lens. The collimator is interposed between the means for placing the object and the image forming means, while the lens, the collimator, and the image forming means are situated in the same half-space with respect to the means for placing the object and are jointly movable with respect thereto without changing their mutual arrangement, whereby the object can be scanned with a common focus of the lens and collimator.

In both of the particular embodiments mentioned above the fact that all the elements of the device are located in the same half-space with respect to the means for placing the object enables one to examine an object accessible only unilaterally.

A still yet further particular embodiment of the device makes use of both the radiation transmitted through the object and that scattered by its internal elements. With this purpose in view the device comprises a source of a plane-polarized radiation, and the optical system incorporates a lens built up of square mono- or polycapillaries having similarly oriented walls and interposed between the radiation source and the means for placing the object, said lens being capable of focusing the radiation inside the object. In addition, the optical system comprises another lens composed of conical capillaries, said lens being located before the image-forming means and having a common focal point with said lens for focusing a plane-polarized radiation. An optical axis of the lens composed of conical capillaries is arranged square with the optical axis of the lens for focusing a plane-polarized radiation in the plane of the vector of magnetic field intensity of said radiation. A possibility is provided for use of one more image forming means and a lens composed of conical capillaries, both being situated symmetrically with those mentioned above, on the other side of the means for placing the object. The device, according to the specific embodiment under consideration, comprises also a lens for forming a quasi-parallel beam, said lens being situated on an extension of the optical axis of the lens for focusing a plane-polarized radiation and being confocal therewith, said additional image-forming means being positioned past said quasi-parallel-beam forming lens. In this case the radiation source, all the lenses mentioned above, and both of the image forming means are conjointly movable with respect to the means for placing the object without affecting the mutual arrangement of said components, thus making possible, similarly to the preceding embodiment, scanning of the object. Use of both the scattered radiation and the radiation transmitted through the object adds to the scope of information obtained on the object under examination and makes it possible, other things being equal, to reduce the exposure dose of the object.

The herein-proposed lens for converting a flux of neutral or charged particles which is an element of the optical system of the device considered hereinbefore in every particular embodiment thereof, is established, like the known lens disclosed in US Patent No. 5,192,869, by a set of radiation-transfer channels having reflecting walls. Unlike said known lens, all or part of said channels of the proposed lens are arranged orderly across the lens according to axial symmetry. In particular, there are possible the kinds of symmetry stated hereinbefore in the summary of the invention concerned with the device for producing the image of an object.

In a particular case all the channels of the lens may have straight longitudinal axes which may be both parallel and convergent (divergent). In the latter case the channels are cone-shaped. Interference phenomena occurring due to orderly and symmetrical arrangement of the channels across the lens, make it possible to focus the lens emergent radiation even with the parallel channels said lens is formed by.

In the particular embodiments of the lens, wherein the channels the lens is formed of, are bent (save the central channel), their bend is the same for the channels equally spaced apart from the axis or plane (planes) of symmetry of the lens in its longitudinal section. This enables one to meet the condition of an orderly and symmetrical arrangement of the channels in any cross-section of the lens and to provide focusing of the emergent radiation using not only the guiding properties of the channels forming the lens but also the interference phenomena occurring in the space, wherein the lens emergent radiation propagates (on the base of reciprocity the lens possesses similar properties when functioning "as receiver", that is, with respect to the diverging radiation emitted by a quasi-pointlike source and incident on its exit end the lens may serve as a means for forming a quasi-parallel beam). Cross-section of the channels is variable along their length in accordance with a change in the lens cross-section as a whole, whereby the channels can be placed snugly, thus making it possible to do away with the use of supporting elements when assembling the lens.

When the lens channels are bent the lens can be shaped as a flare or funnel, a half-barrel, a symmetrical or unsymmetrical barrel, etc .

Whenever the outer side surface of the lens is convex-shaped (in particular, has the shape of a half-barrel, barrel, etc.), with the purpose of providing most favourable conditions for interference of the emergent radiation (from the standpoint of its efficient focusing), the channels are expedient to be arranged round the lens longitudinal axis in layers featuring the same total cross-sectional areas of the channels beloging to said layers, the radii of the bent channels (i.e., all of them save the central one) decreasing in the direction from the lens longitudinal axis towards the lens periphery. It is an inversely proportional relationship between the bending radius and the number of the layer counting from the central one located on the lens longitudinal axis that proves to be most expedient.

Best results are attained when one of the following quantitative relations is observed:

(a) Radii of curvature of all bent channels are not to exceed

$$R_c = 2d/\Theta_c^2,$$

where

d      is the channel diameter; and
$\Theta_c$      is the critical angle of reflection for the least-energy particles in the spectrum of the radiation being transferred;

(b) Radii of curvature of all bent channels have a minimum value of

$$R_c = 2d/\Theta_c^2,$$

where

d      is the channel diameter ; and
$\Theta_c$      is the critical angle of reflection for the highest-energy particles in the spectrum of the radiation being transferred;

(c) Radii of curvature of all bent channels meets the condition "a" and are inversely proportional to the number of the layer they belong to (when the numbers of layers are counted in the direction from the lens longitudinal axis towards the periphery thereof).

The channel curvature may also be variable lengthwise the lens, in particular, monotonically variable.

The channels may have a helical surface, which promotes controlling a polarized radiation. It is practicable for a lens having such channels that all its channels feature the same hand of helix, or the channels of the various groups have opposite hands of helix.

The assembly procedure of the lens can be facilitated and its accuracy be enhanced when the lens is made up of similar modules arranged orderly in the lens cross-section with due observance of an axial symmetry (in particular, a symmetry with respect to mutually square cross-sectional axes). In this case said modules (the first-level modules) can be composed of smaller modules (the second-level modules), which in turn can be built up of yet smaller modules (the third-level modules), and so on. Each individual module of a given level is formed by the modules of a smaller level taken in the number equal to the number of the first-level modules having the same shape and mutual arrangement as the first-level modules.

In all the embodiments of the lens mentioned before its channels may be established, in particular, by the inner walls of glass mono- or polycapillaries.

In all particular embodiments of the lens the inner walls of its channels can be provided with coatings having at least one layer and establishing, together with the walls themselves, a multilayer structure, wherein its adjacent layers have different electromagnetic properties. Moreover, the interface between at least two adjacent media may be in another phase state compared with their base layer. This makes it possible, when channeling the particles, to use not only the phenomenon of multiple reflection but also diffuse and potential scattering, which contributes to an increase in the angle of radiation capture and improves channeling of a charged particles (when the coating is electrically conducting and superconducting) and of neutral particles (when the coating appears as a magnetic layer), etc.

There may be applied diffraction structures having one or more periods to the inner walls of the channels, which makes it possible, using the lens, to monochromatize the radiation incident on its entrance and to divide said radiation into fluxes corresponding to the various spectral lines (when the coatings are applied as diffraction structures having several periods), etc.

An embodiment of the lens is also possible, wherein use is made of a single reflection in each of the lens channels for transforming a diverging radiation into a quasi-parallel one, or for focusing the latter radiation. Such being the case, the channels have their butt ends located on two concentric spherical surfaces. The axes of the channels are radially oriented, and their length and cross-sectional dimensions are so selected as to provide a single reflection with a possibility of radiation capture within the limits of the quadruple magnitude of the critical angle of reflection when the radiation source is located on the lens optical axis and spaced apart from the inner spherical surface a distance equal to half its radius.

According to the various embodiments the lens may be a set of miniature lenses, in particular, placed snugly and having a total cross section variable lengthwise the lens according to the longitudinal profile thereof. In particular, in the aforementioned embodiment of lens composed of the first-, second-, and higher-level modules each module of the highest level may be a miniature lens. In this case a variety of miniature lenses may be provided, e.g., those belonging to the different layers encompassing the lens longitudinal axis, featuring different angles of radiation capture and different focal lengths.

The lens may comprise, apart from the channels orderly arranged across it, also randomly arranged channels, and the latter channels may outnumber the orderly arranged ones.

Brief Description of the Drawings

In what follows the herein-proposed invention is illustrated by the accompanying drawings, wherein:

FIG.1 illustrates producing the image of an object irradiated by a quasi-parallel beam of particles, involving the use of a reducing hemilens ;

FIG.2 illustrates producing the image of an object irradiated by a divergent beam of particles with the aid of a reducing asymmetrical lens;

FIG.3 illustrates producing an enlarged image of the object inner element, using the radiation transmitted through the object;

FIG.4 illustrates producing a mosaic image of an object, using a source of diverging radiation and a system of reducing asymmetrical lenses;

FIG.5 illustrates producing an enlarged image of an object with the use of a diverging radiation source and a conical hemilens;

FIG.6 illustrates producing the image of an object with the use of a diverging radiation source, a conical lens for filtering the radiation, and an enlarging conical hemilens;

FIGS.7 and 8 show particular cases of producing alternating images of an object corresponding to two $K_\alpha$ spectral lines, said cases differing in the techniques or cutting-off the hard spectral portion;

FIG.9 illustrates simultaneous producing of the images of an object which correspond to two $K_\alpha$ spectral lines;

FIG.10 illustrates producing the image of an inner object element, whereon the source-emitted radiation is focused, without exposure of the same tissues surrounding said element to a constant effect of radiation;

FIG.11 illustrates producing the image of an object, using the object-scattered radiation;

FIG.12 illustrates producing the image of an object involving focusing of the image-transferring lens on one of the elements of the object, and irradiating the latter by a flux of particles exciting X-rays;

FIG.13 is a view of FIG.12 involving monochromatization of a secondary radiation;

FIG.14 shows the use of a conical hemilens focused on one of the object elements, for transferring the Secondary radiation, and an asymmetrically cut doubly curved crystal monochromator ; FIG.15 producing the image of an object, using backscattered Compton radiation;

FIG.16 is a view of FIG.15 involving focusing the source-emitted radiation on the inner element of the object ;

FIG.17 shows simultaneous producing of the images of an object, using a radiation that has passed through the object and been scattered by it, the object being exposed to the effect of a plane-polarized radiation;

FIG.18 shows an ordered structure of channels in the lens cross section, featuring a mirror symmetry with respect to two axes, as well as a central and a rotational symmetry;

FIG.19 shows a cross-sectionally symmetrical lens made up of planar structures ;

FIG.20 shows a cross-sectional lens structure possessing a rotational symmetry alone;

FIG.21 shows the use of a set of parallel straight capillaries as the lens, and distribution of the intensity of emergent radiation in the focal plane;

FIG.22 shows a symmetrical structure of the lens cross section, said lens being made up of rectangular-shaped modules, and a module of said structure built up of smaller modules of the second level;

FIG.23 is a view of a lens in the form of a bundle of bent capillaries ;

FIG.24 is a view of a polycapillary featuring a cross-section invariable with length;

FIG.25 is a view of a lens in the form of a set (assembly) of miniature lenses;

FIG.26 is a view of a conical lens made with the use of miniature lenses ;

FIG.27 is a view of a lens (hemilens) shaped as a half-barrel and adapted for transforming a diverging radiation into a quasi-parallel one (or for focusing a quasi-parallel radiation);

FIG.28 is a view of a barrel-shaped lens for focusing a diverging radiation;

FIGS.29 and 30 depict asymmetrical lenses for focusing a diverging radiation, said lenses featuring a constant and a variable bending radius of the channels, respectively, in a longitudinal lens section;

FIG.31 is a view of a funnel-shaped lens having a concave lateral surface;

FIG.32 is a view of a lens having coaxial channels or layers of channels featuring a symmetry with respect to the longitudinal lens axis; and

FIG.33 shows a lens for transforming a diverging radiation into a quasi-parallel one (or for focusing a quasi-parallel radiation), said lens being made in the form of a set of radially oriented channels and being capable of a single reflection of the radiation being transformed.

Best Methods for Carrying Out the Invention

As has been stated hereinbefore in the disclosure of the herein-proposed invention concerned with a device for producing the image of an object, said device is capable of producing a direct-shadow image in the radiation transmitted therethrough, and an image in the form of a distribution of the intensity of a radiation scattered by the object or excited in its substance.

When considering the operation of the proposed in detail, unless it does not affect the correct understanding, the term "object" is employed for the sake of brevity rather than the term "means for placing the object" (inasmuch as when describing the operation of the device, it is essential an interaction between the radiation and the object itself rather than interaction with the means for its arrangement, though it is said means, not the object that proves to be the unit of the device).

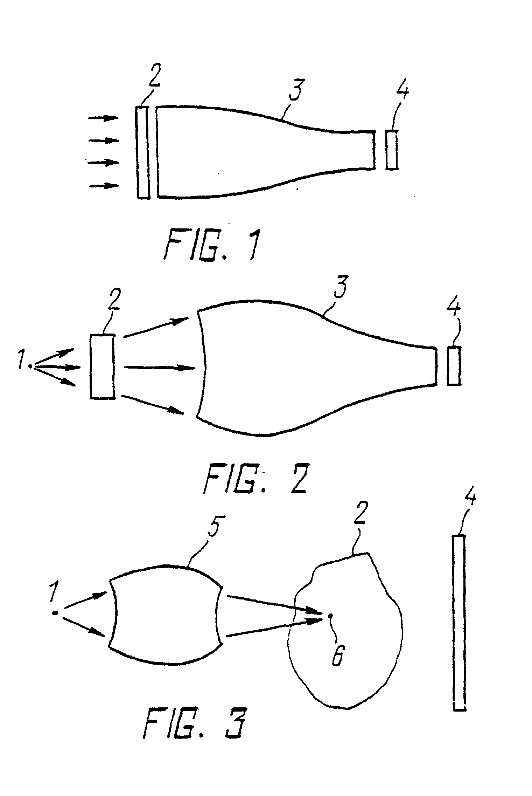

An embodiment of the device according to the former of the cases mentioned hereinabove is illustrated in FIG.1, wherein an object 2 is irradiated by a quasi-parallel flux of particles (means for forming said flux, e. g., a synchrotron, are omitted in the Drawing). The radiation transmitted through the object 2 is transferred to an image forming means 4 by an image-reducing hemilens 3. As it has been stated above, this makes it possible to decrease the object exposure dose without reducing the radiation intensity, which becomes practicable due to concenration of the radiation effected when the image size is reduced by the hemilens 3. Used as the means 4 may be any radiation receiver (detector) that enables one to visualize the image detected (e.g., a film-loaded magazine, an X-ray image intensifier, etc.; cf., in particular, "Physics of image visualization in medicine", edited by S.Webb, Moscow Mir PH, 1991, vol.1 (the Russian translation).

When observing the condition

$$\Theta_1 \leq (d_1/d_2)\Theta_2, \qquad (1)$$

where

$\Theta_1$    is divergence of a quasi-parallel beam;
$\Theta_2$    is divergence of the emergent radiation of the hemilens 3; and
$d_o, d_1$    are the entrance and exit diameters, respectively, of the hemilens 3,

the minimum loss in the radiation being transferred is attained. This makes it possible to reduce the power of the radiation source and the object exposure dose.

When the object 2 is exposed to radiation emitted by a source 1 having finite dimensions and generating a diverging radiation (FIG.2), which after having passed through the object 2, is transferred to the image forming means 4 with the aid of the asymmetric lens 3 that reduces, as in the preceding case, the image size, the following condition is to be met:

$$b/f = (d_1/d_o)\Theta_2, \qquad (2)$$

where

b    is the diameter of the exit aperture of the radiation source 1;
f    is the distance from the radiation source 1 to the object 2;
$d_o, d_1$    are respectively the entrance and exit diameters of the asymmetric lens 3; and
$\Theta_2$    is divergence of the emergent radiation of the asymmetric lens 3 which is incident on the image forming means 4.

In order to produce an enlarged image of an inner element 6 of the object 2 (FIG.3) the radiation emitted by the source 1 is focued on said element 6 by means of a lens 5. The image forming means 4 is in this case spaced apart from the object 2 a distance that depends on the desired degree of image magnification.

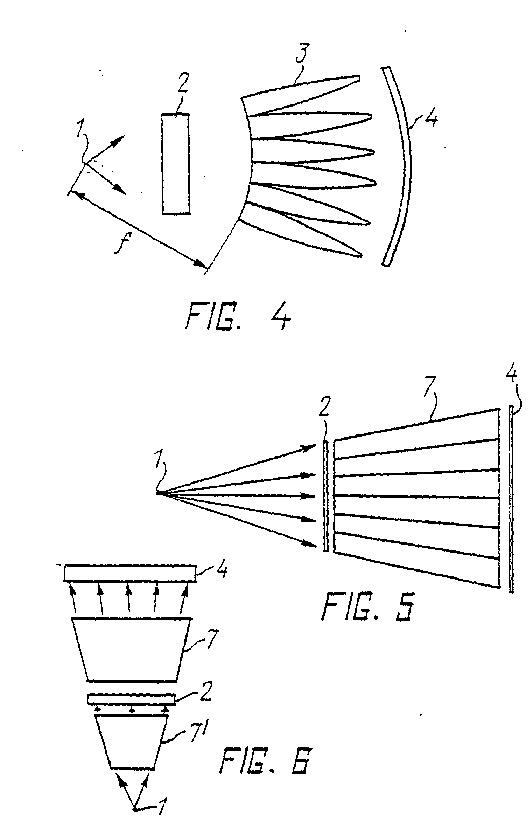

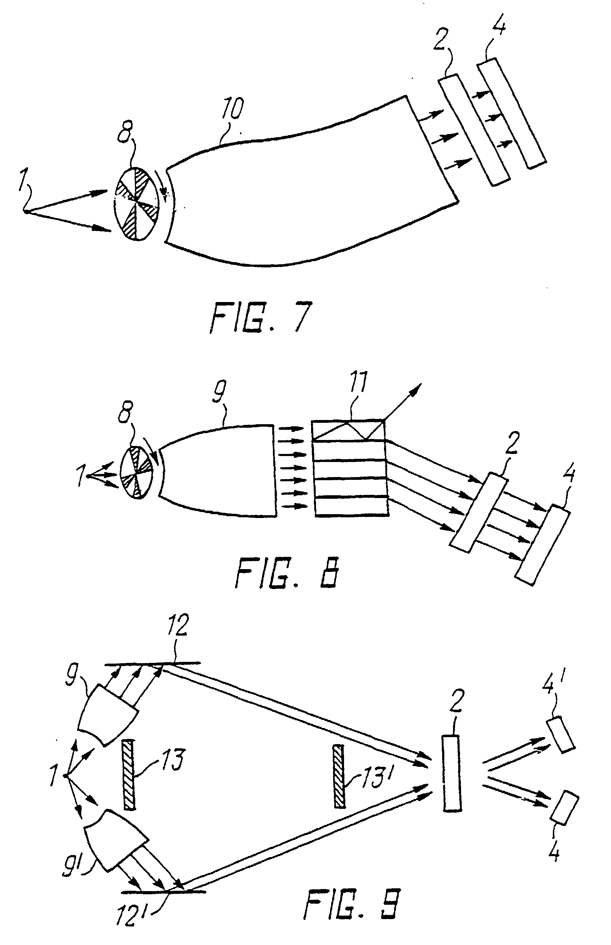

Information about the object can be obtained in divergent beams (FIG.4); in this case located past the object 2 is a system of the converging lenses 3, and situated behind said system is the image forming means 4 in the form of a mosaic pattern established by the system of the hemilenses 3, while the radiation source 1 is located at the focal point of said system. In this case the relation (2) must hold true for each of the hemilenses 3. Such an embodiment of the device can find application, in particular, for mammography.

According to one of the embodiments the image of the object 2 is transferred with the aid of a diverging lens 7 at the focal point of which the radiation source 1 (FIG.5) is situated. In said embodiment the elements of the lens 7 are made up of conical channels that flare up towards the image forming means 4. Spatial resolution of such an optical system approximates the diameter of the transfer channel at the lens entrance.

The radiation may be subjected to filtering before the object, using another conical lens 7' located before the object 2, and a secondary scattered radiation resulting in the object 2 may be suppressed with the aid of the lens 7 (FIG.6), which is an improved version of a medical raster.

A number of embodiments of the proposed device aimed at use predominantly in angiography, is shown in FIGS.7 - 9.

In an embodiment of FIG.7, the radiation source emits photons featuring two $K_\alpha$ spectral lines (in angiography these lines are above and below the line of absorption of iodine, i.e., near 33 keV). A rotary window 8 is filled with a filter which at one instant absorbs one of the abovesaid lines and passes the other line, and at a next instant it reverses its action. The aforesaid window may also be placed past the lens. A lens 10 renders the beam quasi-parallel and at the same time cuts off, due to the presence of a bend therein, the hard radiation component emitted by the X-ray tube.

FIG.8 shows an embodiment of the device, wherein used for cutting off the hard radiation component is a set 11 of parallel capillaries which is located past a hemilens 9 which forms a quasi-parallel beam.

In a further embodiment (FIG.9) the image is transferred with the aid of two hemilenses 9, 9', two crystals monochromators 12, 12', and two image-forming means. In this case one of the $K_\alpha$ spectral lines is transferred and reproduced with the use of the crystal monochromator 12 and the image-forming means 4, and the other $K_\alpha$ spectral line, by means of the crystal monochromator 12' and the image-forming means 4'.

Protective shields 13, 13' are provided lest the radiation emitted by the source 1 gets directly on the object 2.

The hemilenses 9, 9' form quasi-parallel beams, while the crystals monochromators 12, 12' provide for a monochromatized radiation corresponding to one of said $K_\alpha$ spectral lines. In all the three embodiments discussed before (FIGS. 7 - 9), one more lens may be provided before each of the image-forming means, said lens being aimed at reducing the image size and serving also for decreasing the patient's exposure dose. In order to attain an efficacious reduction of the exposure dose, the beam divergence $\Theta_1$ before the patient should satisfy the condition: $\Theta_1 = \Theta_c(d_1/d_o)^2$, where $\Theta_c$ is the critical angle of reflection with the energy E = 33 keV, and the factor $(d_1/d_o)^2$ is the ratio between the exit and entrance cross-section areas of the lens.

The two resultant X-ray images (which alternate with each other periodically in the device of FIGS. 7, 8, or exist concurrently in the device of FIG.9), are processed jointly, using the subtraction method, with the resultant suppressed-background image, wherein the object elements of interest for the operator, such as blood vessels, are more readily discernible.

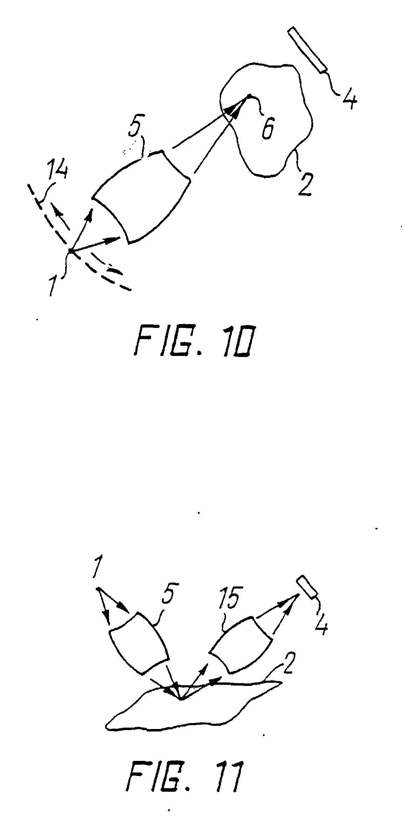

According to one of the variants of practical application of the proposed device, wherein an image is formed with the aid of the radiation that has passed through the object, the radiation is focused on the inner element 6 of the object 2 which is the target of examination, e.g., a tumor (FIG.10), using the lens 5. The image forming means 4 is located on the optical axis of the lens 5 on opposite side of the object 2. The radiation source 1, the lens 5 and the image forming means 4 are positioned stationary with respect to one another but a system their make up jointly is rotatable round the center which is in fact the point 6 of radiation focusing. The radiation source 1 and the image forming means 4 are movable over spherical surfaces of the corresponding radii (such a surface 14 for the radiation source 1 being indicated with dashed lines in FIG.10). It is due to such a movement that the radiation is constantly concentrated on, e.g., the tumor 6 whose image is to be produced, whereas the tissues surrounding the tumor are exposed to the effect of radiation only for a certain lapse of time within the observation procedure.

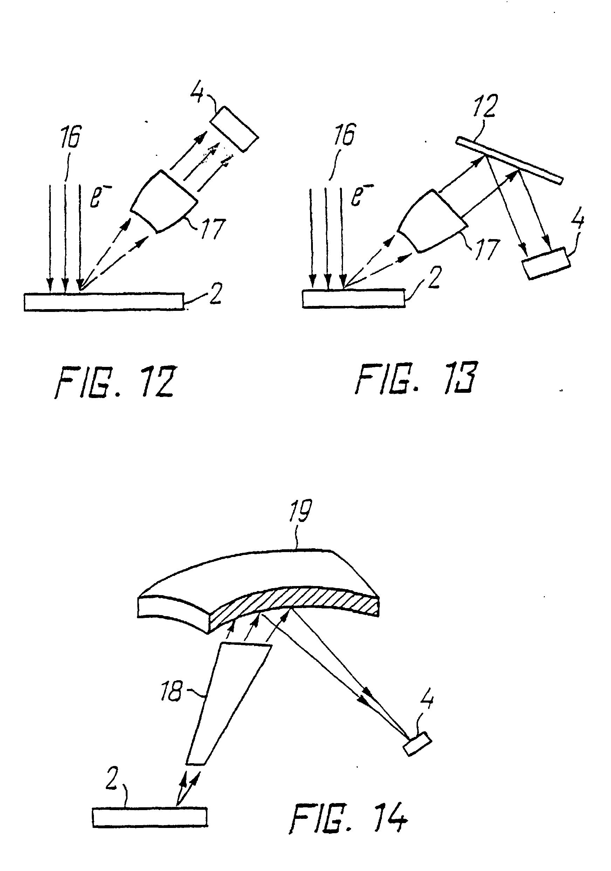

FIG.11 illustrates an embodiment of the device in the case where used for image formation is a secondary radiation scattered by the object or excited therein by the source-emitted radiation. In the drawing of said Figure the lens 5 focuses the radiation emitted by the source 1 on one of the elements of the object 2, and a lens 15 focused on the same elements from the entrance side, transfers the secondary radiation to the image-forming means 4. It is due to the movement of a system, consisting of the radiation source 1, and the lenses 5, 15 (with the mutual arrangement of said components remaining unaffected) with respect to the object 2, or due to the displacement of the object relative to said system that scanning of the object by a common focus of the lenses 5 and 15, thus making it possible to produce, with the aid of the image-forming means 4, a distribution pattern of the object properties that influence the parameters of the secondary radiation. Such geometrics is instrumental in both the solving of the locality problem and suppressing the background resulting from the scattered radiation, which adds to the sensitivity of the method. This particular embodiment of the proposed device is expedient to be used for a precision locating of the position or seating of defects, localizing heavy elements, etc.

FIGS.12 - 14 illustrate an embodiment of the proposed device for use in forming the image of an object with the aid of the radiation excited therein.

Secondary X-radiation can be excited in the object 2 (in the capacity of which may be, in particular, a sample (specimen) of the material or substance under examination) with the use of an electron or ion beam 16, and said radiation can be collected, with the aid of a hemilens 17 (FIG.12), on the image-forming means 4.

According to another embodiment of the device (FIG.13), the radiation collected by the hemilens 17 is directed onto the monochromator 12 and further onto the image-forming means 4.

The radiation can be efficiently monochromatized using a cone-shaped hemilens 18 and a doubly curved crystal monochromator 19 (FIG.14).

Two more specific embodiments of the proposed device provide for image production with the use of a backscattered Compton radiation.

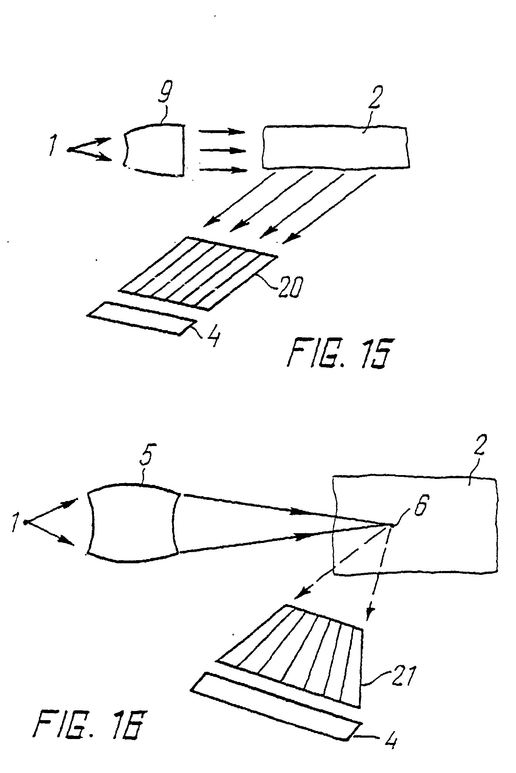

According to the former embodiment (FIG.15) a quasi-parallel beam established by the hemilens 9 (or received directly from a synchrotron source), is directed onto the object 2. A backscattered radiation gets on the image-forming means 4 through a collimator 20 made up of a system of straight capillaries.

According to the latter embodiment (FIG.16) the radiation generated by the source 1 is focused by the leans 5 on the object 2, in particular, on the inner element 6 thereof. A lens 21 composed of cone-shaped capillaries, is focused at the same point, the image-forming means 4 being situated past the lens 21. Depending on the specific situation, the object can be scanned by a beam (in which case a system composed of the radiation source 1, the leans 5, the leans 21, and the image-forming means is movable relative to the object as an integral unit), or conversely, the object is movable with respect to the aforesaid components of the device.

In both cases all the components of the device are located in the same half-space with respect to the object. The means for placing the object may be in the form of a contrivance establishing contact with the object, e.g., a probe jointly movable with the other components of the device relative to the object.

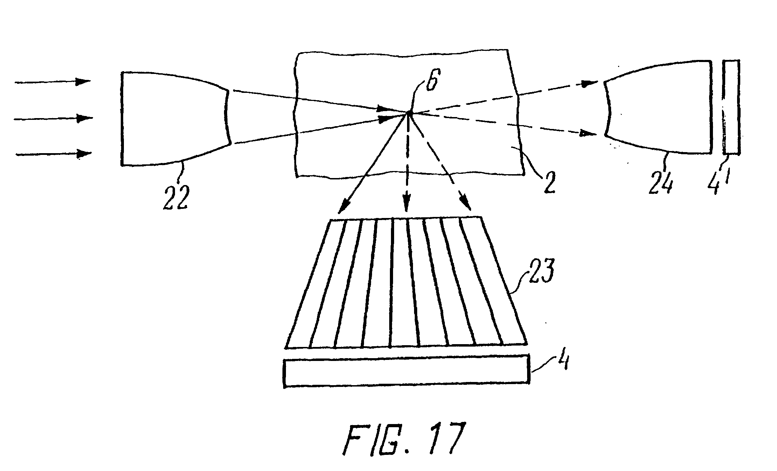

In order to make analysis of a diversity of objects, medical diagnosis inclusive, efficient use can be made of a polarized radiation. A plane-polarized quasi-parallel radiation from, e.e., a synchrotron source is focused on the inner element 6 of the object 2 by a lens 22 composed by square mono- or polycapillaries having all their walls oriented similarly (FIG.17). Another lens 24 is conjugate with the lens 22, while the image-forming means 4' is located past the lens 24.

One more image-forming means 4 is situated behind the conical lens 23 whose optical axis is square with a common optical axis of the lenses 23 and 24 and is parallel to the vector of a magnetic field generated by the plane-polarized radiation. The conical lens 23 is focused at the same inner point of the object as the lenses 22 and 24. Two images are created in the device according to such an embodiment, one of them being formed by the means 4' using the object-transmitted radiation, and the other image, by the means 4, using the scattered radiation. Another pair of similar elements may be arranged symmetrically with respect to the lens 23 and the image-forming means 4, which renders the device more informative.

It is worth emphasizing that a possibility of scanning with the lens focal point inside the object opens up fundamentally new possibilities in diagnosing a variety of objects, medical diagnosis inclusive. As a matter of fact, it is the onset of a new kind of microscopy, wherein the focal point of a source is located inside the object, as it were. In addition, geometrical unsharpness of the image of the source is substantially decreased. Such unsharpness is usually expressed by the following conventional formula:

$$U_r = bd_s/l_f,$$

where

b  is the size of the object, $l_f$ is the distance from the object to the tube focal point, and $d_s$ is the distance from the object to the detector.

When the source is located outside the object the values of $d_s$ and $l_f$ are comparable, and the value of $U_r$ approximates that of b, that is, the resolution approximates the size of the source. When the lens focal point is spaced very close apart from the defect in the object, the value of $d_s$ may be very low and hence the resolution increases. In this case a fundamentally new possibility is provided, that is, a great increase in the spatial dimensions of the defect under examination.

As has been stated above, axial-symmetry lenses possess interference properties, that is, said lenses have a central maximum, secondary maxima and minima. The width of the central maxima approximates the diameter of the radiation transfer channel, e. g., the capillary diameter. A total intensity in the central maximum is directly proportional to $N_c^2$, where $N_c$ is the number of capillaries in the lens. Thus, such lenses can be efficiently used for obtaining information on the object, wherein defects are located.

When, e.g., the defect shadows $N_q$ capillaries, the intensity in the central maximum becomes nearly proportional $(N_c-N_q)^2$. This quadratic relation enables one to observe very efficaciously even minor defects even minor in the object. For instance, while scanning various areas in the object and then subtracting the values of intensity in the central maxima from one another (the so-called subtraction method), one can easily found the presence of the defect and its locality.

High energy resolution can be attained with the use of a device, wherein the means for placing the object (sample) is followed by a lens featuring an axial symmetry. Such a lens is capable of energy resolution at a very high level. For instance, if it is necessary to attain an energy resolution on the lens optical axis to a certain level $\Delta E$ near a certain energy E, so a spatial resolution $\Delta f = f\Delta E/E$ corresponds to said energy resolution, where f is the lens focal length for the energy E.

In an embodiment of the device adapted for use in science and analytical instruments and devices, X-ray beams are used for receiving information about the elementary composition of the specimen. In a fluorescence analysis a primary X-ray beam excites characteristic lines, and the elementary composition of the specimen is reproduced by the analysis of said lines. Two methods are used, as a rule, in this case, namely, precision dispersion analysis against wavelengths, since Bragg's diffraction is made use of, or energy dispersion analysis, wherein the energy spectrum of secondary particles is measured.

In both cases use of the lenses of the proposed device offers evident advantages. For example, when performing diffraction measurements, whereing X-rays generated by an X-ray tube are used as the original beam, a loss in the radiation intensity by 6 - 7 orders of magnitude occurs. This is concerned with the fact that only those photons which meets the Bragg law, that is, the photons should feature a divergence of from $10^{-3}$ to $10^{-4}$ rad depending on the type of crystal used.

Tomographs have gained a very widespread application in the modern diagnosis, though they suffer from a number of disadvantages inherent therein, namely, high exposure dose and their spatial resolution far from being always adequately good, both of said disadvantages being interrelated. For instance, if one tries to enhance the resolution twice, the exposure dose has to be increased 16-fold. That is why the resolution value from one to few millimetres is common to the up-to-date tomographs.

It is a routine practice to use a continuous spectrum of bremsstrahlung, which is accompanied by the onset of the so-called "hardness effect", wherein harder photons are absorbed in the object to a lesser extent than softer ones, whence some difficulties are encountered during image reconstruction, especially at the bone-muscle boundary.

The aforementioned difficulties can be overcome by using the herein-proposed device. In this case the tomograph layout may be the same in the secondary-generation tomographs, that is, the radiation source is placed before the patient, while positioned therebehind are an image-reducing lens and a detector (i.e., the sensor of the image-forming means). The patient is immovable, while the radiation source, the lens, and the detector are rigidly interlinked and scan the patient's body.

In order to get rid of the "hardness effect" the source-emitted radiation can be monochromatized by resorting to various techniques. For instance, a hemilens may be positioned past the radiation source, and an assembly of parallel capillaries be placed past the hemilens, while the angle of entrance of the radiation emerging from the hemilens to said assembly can be adjusted, thereby adjusting the radiation spectrum.

In the present-day tomographs the density distribution is judged by registering the radiation running from the source to the radiation detector. In this case, in order to gain information on the density distribution in one cut or another, a great number of exposures (as a rule, over one hundred) of the section should be carried out at different angles, the exposure dose being usually as high as 1R and over. The situation may be improved upon if one should register the Compton scattering at the place under examination of the object concurrently with registering the radiation absorption.

To this end the focal point of the X-ray lens is aimed at the place under examination. To the same focus is oriented another system of lenses (or collimators) rigidly coupled to the former X-ray lens. Such a system is able to scan the object in three directions. The second system of lenses mentioned before is associated with detectors capable of registering the Compton scattering. Another system of detectors is positioned past the object opposite the first lens in order to register the absorption of radiation. Such a system of tomography is assessed to provide a better resolution at a lower exposure dose. The layout of the device carrying said method into effect is similar to that depicted in FIG.17.

Practical application of the proposed device in medical diagnosis can result in a drastically reduced exposure dose and a high spatial resolution. Reduction of the exposure dose can be attained by virtue of filtering a quasi-parallel radiation, as well as due to a possibility of image transfer involving a size reduction of the object being examined.

X-ray screens, intensifying screens, vidicons, etc. have an imagery threshold, which varies depending on the screen type, energy of photons, etc. Here and hereinafter said threshold is assumed, with the purpose of assession, to be $n = 10^8$ photon/cm$^2$.

The object is irradiated by a parallel beam of photons. Located past the object is a lens (or a train of lenses) adapted to focus the radiation, and situated behind said lens or train of lenses is a screen. In the proposed device the entrance-to-exit diameter ratio may be 100:1.

Such being the case, to provide an efficient focusing, the original beam divergence $\delta\Theta$ must be $\delta\Theta / \Theta_c = d_1/d_o$, that is, if $d_o/d_1 = 100$, it is obvious that $\delta\Theta/\Theta_c$ should be on the order of $10^{-2}$; with E = 20 keV, $\Theta_c = 2\cdot10^{-3}$ rad., i.e., with the dimensions diminished by a factor of 100, $\delta\Theta = 2\cdot10^{-5}$ rad. In this case the exit area of a single capillary is reduced $10^4$ times. With such a focusing as little as half the amount of photons that have got in the exit butt end of the lens situated past the object, are incident on the screen.

In this particular case the number of photons necessary for imagery threshold is reduced by a factor of $1/2\cdot10^4$. This means that in the case where a lens is provided behind the object the number of photons incident on the object may be reduced by a factor of 5000. It is necessary at the same time to have a good spatial resolution. As the resolution is two or three times the capillary entrance diameter, so to provide a 100-micron resolution, the capillary diameter should be of the order of 30 microns. In this case, with the dimensions reduced by a factor of 100, the capillary exit diameter should be of the order of 0.3 micron. The angle of convergence (or cone angle) of the capillaries is of the order of $2 \cdot 10^{-5}$ rad., and the lens length will be about 75 cm provided that the lens is composed of a plurality of capillaries or polycapillaries. There are two restrictions imposed upon the minimum size of a capillary, one of them being associated with diffraction and is independent of the energy of photons, the limit size being $C/\omega_p$ = 100 Å, where C is the velocity of light, and $\omega_p$ is the plasma (Langmuir) frequency. The aforesaid limit is small that can be neglected in this particular case. The other restriction is concerned with the physical imaging process. The energy of photons is transformed on the screen of the image forming means, i.e., in the detector, into the energy of electrons which, when dissipated, establish light quanta which produce the image of an object.

Maximum resolution in this case is associated with the range of path of electrons, being equal to about 10 microns.

Let $S_1$ denote a minimum area of the capillaries at the exit end before the screen, said area depending on the final range of electrons; $S_1 = (10 \ \mu m)^2 = 10^{-6}$ cm$^2$. With the entrance area of the capillaries equals $S_o$, the exposure dose reduction J will be $J = aS_o/S_1$, where a is the loss of radiation when transferred through a converging capillary, said loss being equal to 1/2, and with $S_o = 10^{-2}$ cm$^2$, J = 5000.

A minimum resolution 1 equals the capillary entrance diameter multiplied by a factor of the order of 3, that is, $1 \cong$ = 0.3 mm in this particular case.

Thus, as $S_o$ increases, J increases, too, but 1 decreases inversely proportional to an increase in $S_o$.

In cases where a small-size image is to be produced, J decreases, because it is necessary to use the capillaries having small entrance diameters. For instance, when it is necessary to attain the resolution of an image of a tumor about 1 mm in size, it is necessary to use the capillaries having a diameter of about 0.3 mm, with J = 500. Accordingly, for a tumor sized 0.3 mm, J = 50.

A peculiar feature of the construction inherent in at least one of the lenses of the optical system used in the proposed device (and whenever the optical system has a single lens, inherent in said single lens), resides, as it has been stated hereinbefore in the disclosure of the present inventions, in the provision of the radiation transfer channels arranged orderly across said lens with a due observation of axial symmetry. Such a peculiar feature is inherent in the construction of the herein-proposed lens also when said lens is used per se or as a component of any other devices, wherein fluxes of neutral or charged particles are to be converted.

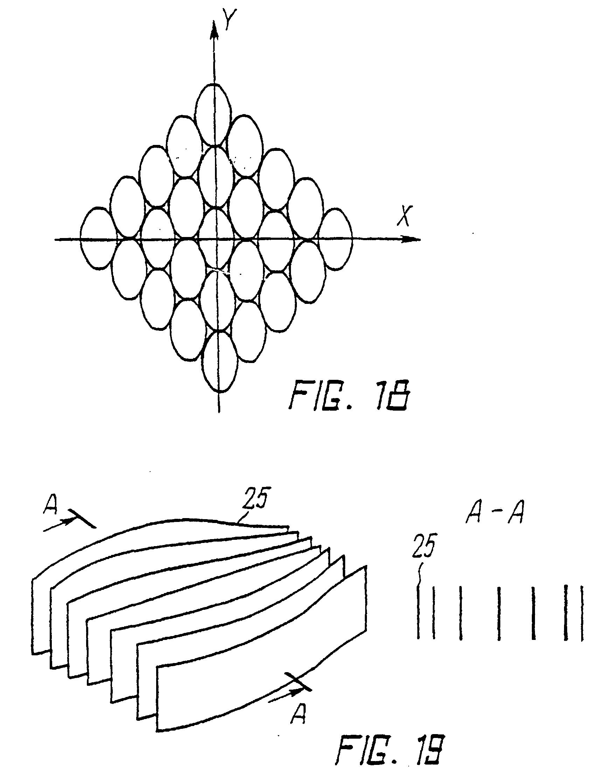

FIG.18 illustrates an ordered arrangement of the lens channels, wherein a mirror symmetry with respect to cross-sectional axes X and Y occurs. In this particular case there occurs concurrently a central symmetry with respect to the lens longitudinal axis which passes square with the plane of the drawing through the point of intersection of the X and Y axes: any element under examination corresponds to the same element lying on a straight line passing through said element and said point on the other side of said point (center of symmetry) at the same distance therefrom as the element being looked at.

Apart from that stated above, FIG.18 shows a rotational symmetry with respect to the same axis as the central symmetry, that is, when rotated round said axis through 180° the figure shown in the drawing coincides with itself.

FIG.19 illustrates the presence of a mirror symmetry in a construction, comprising channels having cross-sectionally open surfaces of their walls and formed by bent planar structures 25.

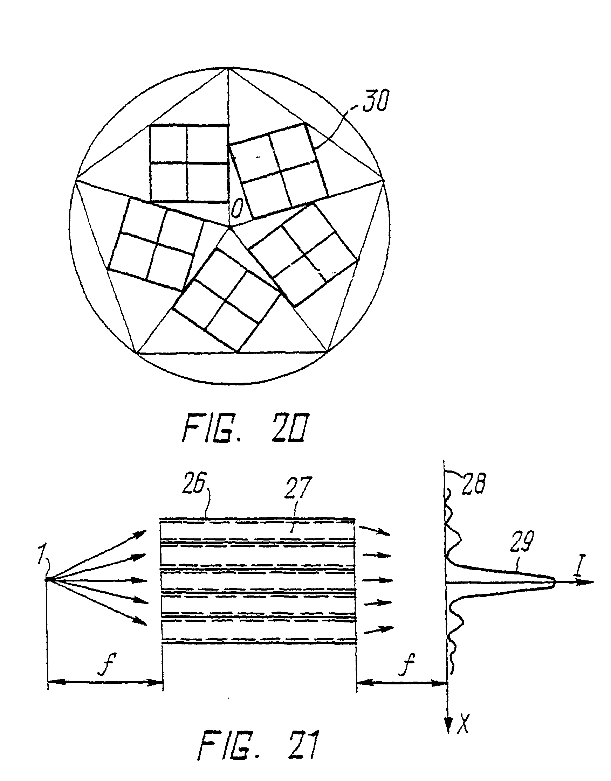

FIG.20 illustrates an ordered arrangement of square channels across the lens, with due observance of a rotational symmetry: when rotated round the lens longitudinal axis passing through the point 0 square with the plane of the drawing the figure shown in the drawing coincides with itself.

As has been stated in the aforementioned disclosure of the invention, provision made in the lens for channels arranged orderly across it with the observance of axial symmetry brings about prerequisites for the onset of interference phenomena for the particles emerging from the lens. This enables one to efficiently focus the radiation even in the simplest embodiment of the lens, i.e., in the form of an assembly 26 (FIG.21) built up of straight parallel mono- or polycapillaries (the so-called "capillary bars"). Indicated with dashed lines in FIG.21 and in a number of Figures described hereinafter, is the presence of coatings applied to the walls of the radiation transfer channels, the part played by them being the subject of a separate consideration. Depending on the length of the assembly 26, there may occur a single-, double-, or multiple reflection in each of the channels 27. The result is an interference pattern arising in a focal plane 28 which is spaced the same distance apart from the lens exit end as the radiation source 1 is spaced apart from the lens entrance end, said interference pattern corresponding to a graph 29 (FIG.21) of radiation intensity I vs the X coordinate, said graph featuring the width of the principal maximum which is approximately equal to the diameter of an individual channel.

Of the same order of magnitude is the size of the focal spot in other construction embodiment of the lens featuring orderly arranged channels across it with the observance of axial symmetry. It is noteworthy, for the sake of comparison, that in the absence of interference phenomena the size of the focal spot is of the following order of magnitude:

$$l_f \approx d + 2\Theta_c f,$$

where

d    is the cross-sectional dimension of an individual channel;

f    is the focal length ; and

$\Theta_c$    is the critical angle of external reflection.

To draw an example, with the particle energy E = 8 keV the angle $\Theta_c$ has an order of $3 \cdot 10^{-3}$ rad. With a typical value of f = 10 cm, the following expression holds true: $l_f$= d + 0.6 mm, that is, the degree of focusing better than 0.6 mm is inattainable even when the channels are built up of very fine capillaries. Provision of conditions in the proposed lens for interference makes it possible to overcome said restriction, with the result that the degree of focusing happens to be dependent on the channel diameter alone.

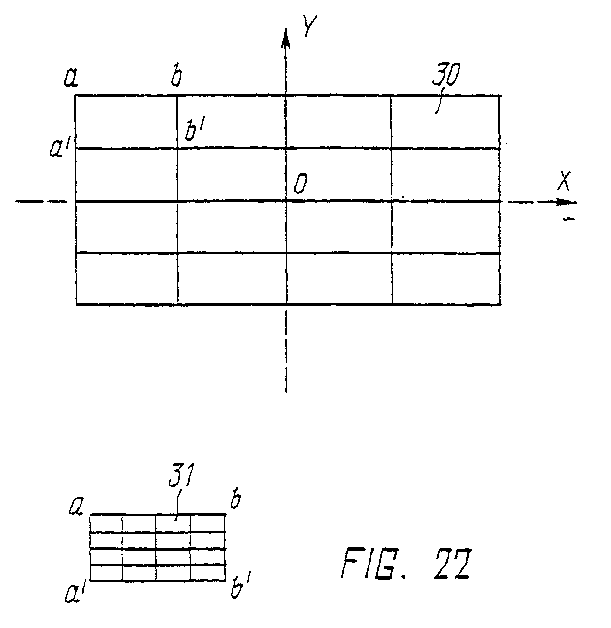

Performance capabilities of the proposed lens provided due to interference, are combined with technological merits inherent in the construction of the lens, wherein orderly arranged radiation transfer channels are in fact a set of similar orderly arranged modules 30 (FIGS.22, 20) obeying axial symmetry.

The aforementioned modules, may in turn be made from smaller modules which are the second-level modules with respect to the preceding ones, which are in effect the first-level modules, and so on.

FIG.22 presents smaller modules 31 from which each of the modules 30 is built, in particular, a module aa'b'b.

Depending on the number of levels of the modules made use of in the lens construction, the symmetry of the first, second, etc. order. Modules of each next level establishing the module of the preceding level, have in each module of the preceding level, the same number, shape, and mutual arrangement as the modules of the first level. The highest-level modules are established directly by the radiation transfer channels.

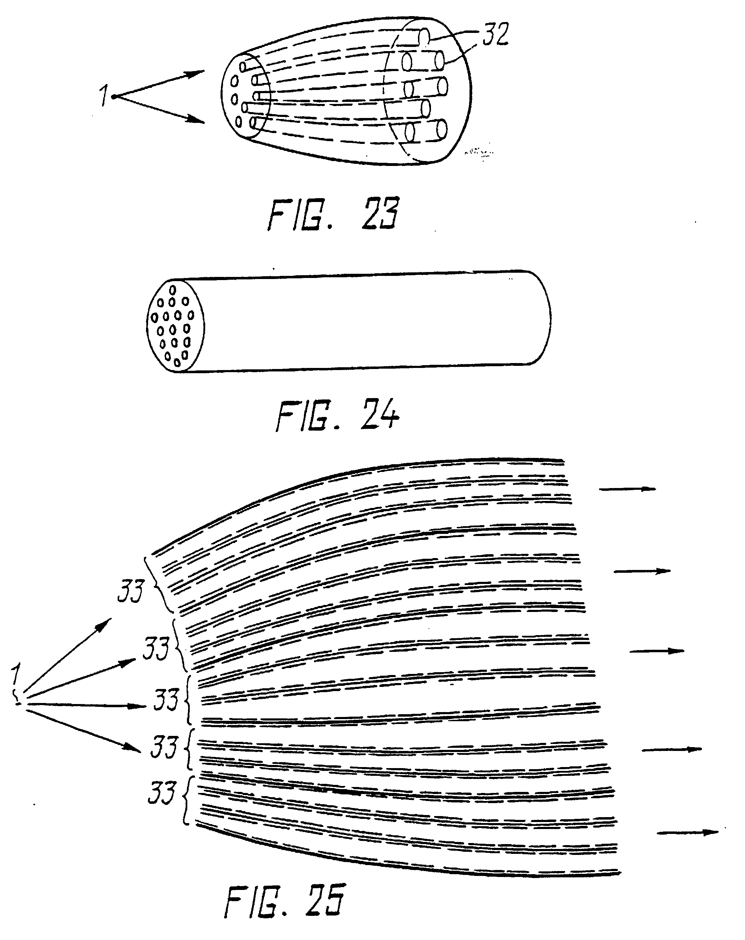

It is most promising to use a lens in the form of bent capillaries, 27 (FIG.23). In this case use is expedient to be made of a polycapillary, i.e., a miniature optical system (FIG. 24). In such a case the lens is in fact a set of miniature optical systems, whereby its effect can be enhanced many-fold.

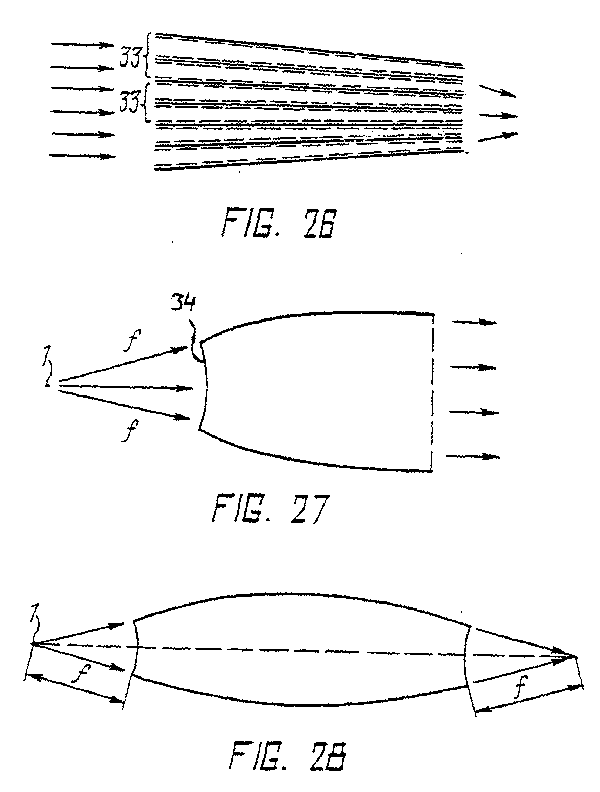

An important trend in the herein-proposed optics may be an optical system appearing as an ensemble or set of miniature lenses, hemilenses, etc. Such sets of miniature hemilenses 33 and lenses are presented in FIGS.25 and 26.

A miniature lens is as a rule one barrel-shaped polycapillary having a maximum diameter not exceeding 0.1 - 1 mm as a rule. The polycapillary is filled with a few thousand or a few tenths of thousands of hollow channels having their cross-section variable lengthwise the channels in such a manner that all the channels can be oriented at the same point.

The miniature lenses are put in a single set of hundreds or thousands of channels, without use of any support elements for forming and retaining the longitudinal profile of an optical system. In the case where the supporting elements are used, they perform their function towards the miniature lenses rather than with respect to individual channels-capillaries. In this case the effect of such an optical system is augmented many-fold compared with the case where the optical system consists merely of capillaries or polycapillaries.

A set of miniature lenses provides many new possibilities, e.g., one can establish a lens having two, three or more focal lengths, for which purpose the set can be divided into two, three, or more layers, each consisting of the miniature lenses differing in focal length.

Miniature lenses having channels with micron- and submicron size levels are manufactured using the technique of drawing intricately shaped geometric figures, in a furnace having an appropriate configuration and a definite temperature field.

An optical system depicted in FIG.26 and shaped as a beam of conical lenses, which comprises also the miniature lenses 33, makes it possible to efficiently focus a quasi-parallel radiation. In addition, such a construction is capable of suppressing the hard portion of the radiation spectrum. This is concerned with the fact that as the radiation passes along the channels, the angle of reflection increases for both photons and neutrons with respect to the walls of the channels. Inasmuch as a harder radiation has a smaller angle of reflection, it is high-energy photons and neutrons that are first to quit the multiple-reflection mode.

When the lens is made up of the modules 30 (FIGS.20 and 22), or of the smaller modules 31 (FIG. 22), such modules may be in fact the miniature lenses described above.

FIG.27 shows a half-barrel-shaped hemilens for transforming a diverging radiation emitted by the source 1 into a quasi-parallel one. An entrance end 34 of said hemilens is concaved so as to provide a uniform intensity of the emergent beam within its cross-section.

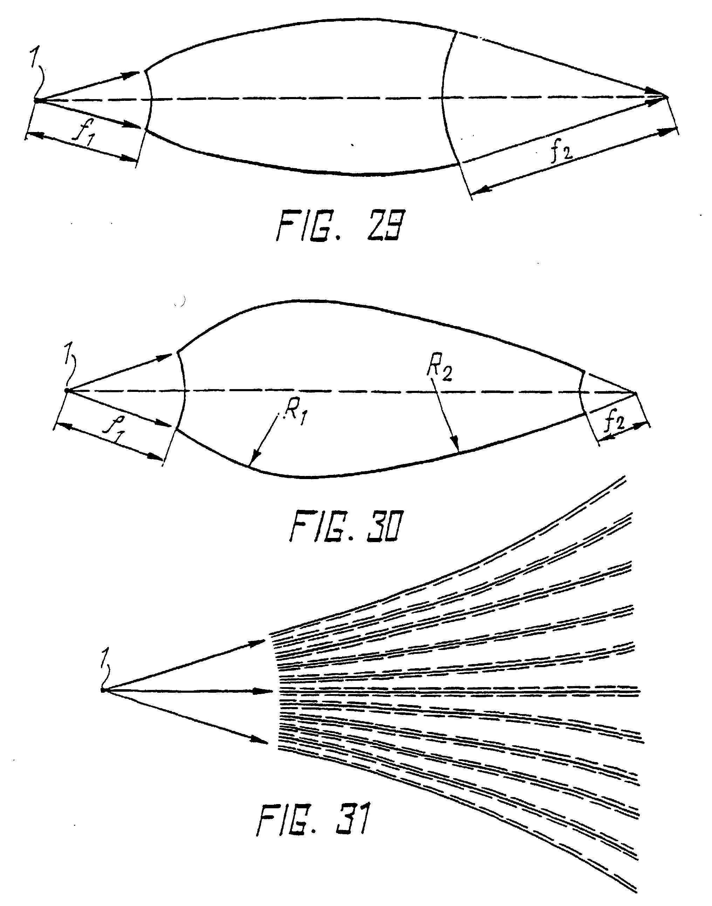

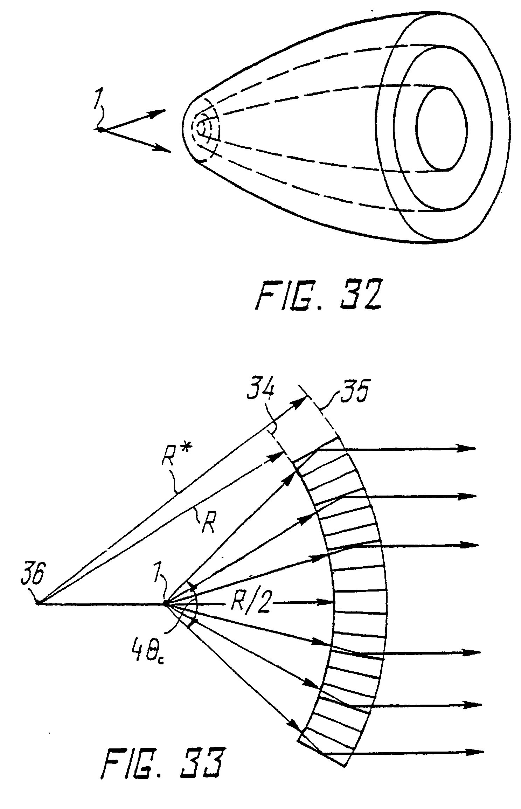

FIGS.28 - 30 present a barrel-shaped symmetrical lens and a barrel-shaped asymmetrical lens, both adapted for focusing a diverging radiation emitted by the source 1. When the symmetrical lens of FIG.28 is used the radiation is focused at a distance f from the exit end thereof, which is equal to a distance between the radiation source 1 and the lens entrance end. For the lenses of FIGS.29 and 30 the distances mentioned above differ from each other, being equal to $f_2$ and $f_1$, respectively. The lens of FIG.29 features its channels having the same radius of bending throughout the entire length thereof, whereas the radiation transfer channels in the lens of FIG.30 have its right-hand portion bent at a radius $R_2$ which is longer than a radius $R_1$ at which the left-hand portion of the channels are bent. There may be the lens which are asymmetrical in a longitudinal section, wherein the channels have a variable bending radius changing monotonically. A lens with bent channels may also be shaped as a flare or funnel (FIG.31); in this case the lens side surface, unlike the lenses of FIGS.27 - 30, is concave rather than convex. Such a lens is expedient to be applied for producing an enlarged image of the object located before the lens entrance end (when a quasi-pointlike radiation source is used). The accuracy of the resultant image is approximately equal to the cross-sectional dimension of the channel at lens entrance.

Apart from the fact that the proposed lens may comprise channels arranged orderly in its cross-section in the sense discussed before, each "layer" of the channels has as a rule its own bending radius and hence its own length. Here and hereinafter the layers of channels are understood to mean, in particular, groups of channels establishing closed contours, which are rectangular with a rectangular cross-section of the lens shown in FIG.22, or annular with a circular cross-section; a layer may be established by a single channel having a corresponding configuration as shown, e.g., in FIG.32. Such layers are coaxial and encompass the lens longitudinal axis, being spaced apart from said axis at different distances. The layers may also not establish closed contours, e.g., be "flat", which is the case when the lens (FIG.19) has a rectangular cross-section, said layers having the same width as said cross-section. For each of such layers located on one side of the plane of symmetry of the lens, said plane passing through the lens longitudinal axis, a similar symmetrically arranged layer should occur on the other side of said plane. In a cross-sectional view of the lens the channels forming such layers are symmetrical with respect to the axis of said cross-section. That is why monochromatic photons undergo unequal number of reflections in various channels so that a system of waves differing in phase arises after said photons have emerged from the lens, considering the process from the standpoint of the wave theory. A phase difference is established due to different lengths of path of the photons along the channels. When the channels are arranged randomly no useful effects are produced, but in the case of axial symmetry this results, as has been stated before, in wave interference. Of practical importance is the fact that a considerable proportion of energy emerging from the lens is concentrated in the central maximum, and the size itself of the central interference spot is found to approximate the cross-sectional dimension of a radiation transfer channel.

In some cases straight mono- or polycapillaries, or else a set of them is efficiently applicable for focusing the radiation emitted by a quasi-pointlike source, the angle of capture of the radiation being $2\theta_c$ and the number of reflections being unity. One of such cases wherein use is made of a system of source-oriented mono- or polycapillaries is shown in FIG.33. In this case the butt ends of the capillaries lie on two spherical surfaces 34, 35 having respective radii R, $R^{\textbf{36}}$ with a com-

mon center 36. The radiation source 1 is placed on the axis of the optical axis at a distance equal to R/2 apart from the inner spherical surface, and the dimensions of the optical system and lengths of the capillaries are so selected that the angle of capture equals $4\Theta_c$ and the radiation undergoes a single reflection only. The same lens can be used for focusing a quasi-parallel beam.

Capillary lenses and hemilenses can be so effected that they would function in many respects as Fresnel zone plates. To this end it is necessary that all the layers have approximately the same area, which can be attained by two ways.

One of them is as follows. With a preset energy value radiation capture is determined by the factor $\gamma = \frac{R\Theta_c^2}{2d}$; when $R < R_c = \frac{2d}{\Theta_c^2}$, so $\gamma < 1$, that is, the factor of capillary filling with the radiation is below unity. The area of the nth layer of the capillaries which is spaced the distance $r_n$ apart from the center is obviously $S_n = 2\pi r_n \Delta r_n$, where $\Delta r_n$ is the capillary diameter in the nth layer (or the width of the nth layer). However, $\Delta r_n$ is directly proportional to $\gamma$, which in turn is proportional to $R_n$. Now if one selects $R_n \sim \frac{1}{n}$ (that is, the bending radii of the capillaries decrease in the direction away from the center), it is evident that $S_n$ is directly proportional to $r_n \frac{1}{n}$, but since $r_n$ is directly proportional to n, so $S_n$ is independent of n, i.e., all layers are equal in area, but the width of layers decreases from the center towards the periphery. Such geometry is completely similar to the geometry of a Fresnel zone plate.

The other way consists in that from the very beginning each layer of capillaries has its own diameter so as to satisfy the condition of constant areas of all the layers.

In both cases described above the lens functions similarly to a Fresnel zone plate.

When manufacturing the capillary lenses and hemilenses the capillary may be so drawn as to make them twisted, and the paths of photons resemble a helical line. It is possible that part of the capillaries "turn" in one sense, and the other part of them, in the opposite sense. This enables one to obtain a number of interesting capabilities. Firstly, if a beam of unpolarized photons (or neutrons, or charged particles) is applied to the lens entrance, said beam can be subdivided, by virtue of the twist effect, into a number of plane-polarized beams. Secondly, when a plane-polarized beam is originally provided, the plane of polarization of said beam rotates in a twisted capillary.

Some further possibilities are opened up due to depositing coatings upon the walls of the radiation transfer channels in order to provide diffuse and potential scattering or interference of the radiation being transferred, occurring on the multilayer structures formed by said coatings and the channel walls (the presence of such coatings being shown schematically with the dashed lines in FIGS.21, 25, 26, and 31).

In order to cut off the soft portion of the spectrum so as to obtain a quasi-monochromatic spectrum from a complex spectrum, the channel walls may be coated by a material which absorbs efficiently said spectral portion.

The fact that the coatings are layered makes it possible not only to transfer the radiation but also to selectively choose part thereof. It is due to the resultant interference that the critical angle of reflection and the reflection factor are very much increased, said phenomenon occurring inside the channels.

The presence of a small transition layer can in many cases increase the lens efficiency to a great extent. For instance, when transferring neutrons said layer can be ferromagnetic, whereby the angle of reflection is increased. When transferring charged particles the layer can be crystalline, whereby reflection occurs in a way resembling channeling of particles in crystals.

Coating the dielectric substrate with a metallic layer makes possible "channeling" the charged particles through such a medium. In the reverse case the dielectric is charged to prevent, by its charge, "channeling" of particles.

In this case the substrate and the reflecting surface differ in their properties because the latter is a metallic layer.

When use is made simultaneously of a multiple reflection of radiation on alternating media differing in physical properties and of its scattering, a possibility arises for efficiently controlling said radiation, while the lenses utilizing said combination may be widely implemented in diverse fields of engineering. In particular, use can be made of a set of rectangular or square capillaries so coated by a multilayer structure that the period of said structure alternates, thus establishing, after reflection, two different quasi-monochromatic beams similarly space-oriented.

Alternating media may be in different phase states. For charged particles crystalline structures are used as a reflecting medium, e.g., a layer with a thickness of a few scores of Ångström units. In this case reflection from said layer occurs similarly to that in channeling between the atomic planes of a crystal.

The critical angle of reflection of neutrons in layer, wherein a magnetic field is present, is determined from the following formula:

$$\Theta_c = \lambda[N\bar{b}/\pi \pm (m/2\pi^2\hbar^2)\mu B]^{1/2},$$

where

N is the nuclear density;
$\lambda$ is the neutron wavelength;
$\bar{b}$ is the nuclear coherent-scattering amplitude;
$\mu$ is the neutron magnetic moment;
m is the neutron mass;
B is the magnetic induction; and
$\hbar$ is Planck's constant.

The presence of two signs, plus and minus, and hence two angles is concerned with two possible polarizations of the neutron spin.

With high-strength magnetic fields when $N\bar{b} < (m/2\pi\hbar^2)\mu B$, a single critical angle of reflection is observed. In this case totally reflected neutrons are polarized.

Therefore, when establishing, e.g., two- or three-dimensional structures having a magnetic reflecting surface, one can control not only the paths but also polarization of neutrons.

There can be established alternating media, wherein the reflecting medium is in fact a magnetic mirror, e.g., a thin cobalt mirror. Using alternating media differing in magnetic properties one can increase critical angles of reflection without decreasing the reflection factor.

Industrial Applicability

The herein-proposed invention can find application in analytical instrument-making, more specifically, in elementary analysis, three-dimensional local analysis, defectoscopy, ecological monitoring, for establishing tomographs with micron and submicron resolution, in microscopy for developing high-efficacy and intensity microscopes, in particular, in microscopic examenations of biological objects, in microelectronics for contact and projection lithography, in X-ray and neutron diffractometry for developing new-type collimators, as new-type diffraction and interference instruments, in particular, for enhancing the density of radiation.

As for medicine the present invention can find application for early diagnosis of oncological, cardiovascular, and some other diseases, for developing endoscopes and dental apparatus of a new type, for treatment of inoperable affections, carcinoma inclusive, as well as in neurosurgery, medical radiology, etc.

**Claims**

1. A device for producing the image of an object, comprising

   a source (1) of radiation which radiation appears as a flux of neutral or charged particles, a means (2) for placing the object with a possibility of being exposed to the effect of radiation generated by said source (1), a means (4) for image formation, said means (4) being capable of registering the distribution of intensity of radiation after its interaction with the object, and an optical system which incorporates at least one lens for converting a flux of particles and interposed between the radiation source (1) and the means (2) for placing the object or between said means (2) and the image forming means (4), said lens being established by a set of channels having reflecting walls for radiation transfer by use of multiple total external reflection,

**characterized in that**

said lens is established by closely packed miniature lenses, wherein each miniature lens consists of a plurality of said radiation transfer channels whose diameters are variable along the lenght of the miniature lens and which define a common single focal point, the total cross section of each miniature lens is variable along the lenght of said lens and the central axis of each miniature lens is bent, and all or part of the radiation transfer channels are arranged in axial symmetry across the cross-section of said lens.

2. A device according to Claim 1, **CHARACTERIZED in that** the channels arranged orderly across the lens cross section with due observance of axial symmetry are grouped together into a number of similar modules (30) arranged orderly with due observance of axial symmetry.

3. A device according to Claim 2, **CHARACTERIZED in that** the lens comprises, apart from said modules (30) which are in fact the first-level modules, also modules (31) of higher levels, each module of each of the preceding levels being established by the modules of a next level having the same shape, mutual arrangement and being equal in number with the first-level modules.

4. A device according to Claim 2 or 3, **CHARACTERIZED in that** each of the highest-level modules is in fact a miniature lens.

5. A device according to any one of Claims 1 through 3, **CHARACTERIZED in that** the image-forming means (4) is so positioned that the radiation transmitted through the object can be transferred to said means.

6. A device according to Claim 5, **CHARACTERIZED in that** the optical system comprises a set of asymmetrical lenses (3) interposed between the means (2) for placing the object and the image-forming means (4), said lenses being so assembled as to transfer the radiation emerging from different elements of the object.

7. A device according to Claim 5, **CHARACTERIZED in that** the optical system comprises a diverging hemilens (7) built up of conical capillaries or polycapillaries and interposed between the means (2) for placing the object and the image-forming means (4) so as to enlarge the image of the object.

8. A device according to Claim 7, **CHARACTERIZED in that** the radiation source (1) is positioned at the focal point of the diverging hemilens (7) made up of conical capillaries or polycapillaries.

9. A device according to Claim 7, **CHARACTERIZED in that** the radiation source (1) is placed on the optical axis of the diverging hemilens (7) made up of conical capillaries or polycapillaries in an out-of-focus position.

10. A device according to Claim 7, **CHARACTERIZED in that** the radiation source (1) has an exit aperture circular in shape with the central portion shielded and located on the optical axis of the diverging hemilens made up of conical capillaries or polycapillaries, in the focal plane of said hemilens.

11. A device according to Claim 7, **CHARACTERIZED in that** the optical system comprises also a second diverging lens (7') made up of conical capillaries or polycapillaries, said second diverging lens having smaller cross-sectional dimensions compared with the first lens (7), and being interposed between the radiation source (1) and the means (2) for placing the object.

12. A device according to Claim 5, **CHARACTERIZED in that** the optical system comprises a lens or hemilens for forming a quasi-parallel beam of particles, said lens or hemilens being interposed between the radiation source and the means for placing the object.

13. A device according to Claim 12, **CHARACTERIZED in that** the radiation source (1) is capable of forming two characteristic $K_\alpha$ spectral lines, and the optical system comprises also a rotary filter-window (8) having two alternating sectors, each being adapted for suppressing the radiation of either of the $K_\alpha$ spectral lines, said filter-window being placed either before or past the lens or hemilens adapted for forming a quasi-parallel beam, said lens or hemilens having either a longitudinal axis with a bend for cutting-off the hard radiation component or a straight longitudinal axis, in which case a set of parallel capillaries (11) is placed before the means (2) for placing the object in order to cut off the hard radiation component.

14. A device according to Claim 12, **CHARACTERIZED in that** the radiation source (1) is capable of forming two characteristic $K_\alpha$ spectral lines, and the optical system comprises also a second lens or hemilens (9') adapted for forming a quasi-parallel beam out-of-parallel to the first beam, and two crystals-monochromators (12, 12'), each being adapted for discriminating either of the two $K_\alpha$ spectral lines, said crystals monochromators being located past said lens or hemilens so as to reflect monochromatized beams towards the means (2) for placing the object, the device comprising also a shield (13, 13') to prevent the radiation generated by the source (1), from getting directly incident upon the means (2) for placing the object, as well as a second image-forming means (4'), each of the image-forming means (4, 4') being located past the means (2) for placing the object so as to register the distribution of intensity of the radiation passed through the object and reflected from one of the crystals monochromators (12, 12').

15. A device according to Claim 5, **CHARACTERIZED in that** the optical system comprises a lens (5) interposed between the radiation source (1) and the means (2) for placing the object, said lens being capable of focusing the radiation inside the object, said lens, the radiation source (1), and the image-forming means (4) being jointly rotatable with respect to the means (2) for placing the object without affecting their mutual arrangement and the position of a point (6) of radiation focusing as the center of said rotary motion.

16. A device according to any one of Claims 1 through 3, **CHARACTERIZED in that** the image-forming means is so positioned that a secondary radiation scattered or excited in the substance of the object due to interaction of said substance with the source-generated radiation, can be transferred to said means.

17. A device according to Claim 16, **CHARACTERIZED in that** the radiation source is capable of forming a flux (16) of electrons or ions for exciting a secondary X-radiation in the substance of the object (2), and the optical system comprises a hemilens (17) adapted for transferring said secondary radiation to the image-forming means (4) and being capable of scanning the object (2) with the focal point of said hemilens.

18. A device according to Claim 16, **CHARACTERIZED in that** the optical system comprises the lens (5) for transferring the radiation generated by the source (1) to the means (2) for placing the object, and a lens (15) for transferring the secondary radiation to the image-forming means (4), both of said lenses having a common focal point and being jointly movable for scanning the object with their common focal point.

19. A device according to Claim 17 or Claim 18, **CHARACTERIZED in that** a beam monochromatization means (12) is interposed between the lens (15, 17) for transferring the secondary radiation to the image-forming means (4) and said means (4).

20. A device according to Claim 18, **CHARACTERIZED in that** a polarizing target is interposed between the lens for transferring the source-generated radiation to the means for placing the object and said means, said target being capable of changing the direction of the beam reflected therefrom by 90° with respect to the beam incident thereon.

21. A device according to Claim 20, **CHARACTERIZED in that** the polarizing target is in fact a crystal monochromator.

22. A device according to Claim 17 or Claim 18, **CHARACTERIZED in that** the lens for transferring the secondary radiation has radiation transfer channels featuring central symmetry with respect to its optical axis and is capable of focusing the radiation being transferred in the space between the lens exit end and the image-forming means, a microdiaphragm being provided in said space with a possibility of scanning said image.

23. A device according to Claim 22, **CHARACTERIZED in that** the microdiaphragm is so positioned that its aperture lies on the optical axis of said lens and is displaced out of focus which corresponds to a preset energy of the particles being transferred, by a distance expressed below:

$$\Delta f = f\frac{\Delta E}{E},$$

where

E is the preset energy of the particles being transferred;
f is the focal length of said lens, corresponding to said energy; and
$\Delta E$ is the required level of energy resolution.

24. A device according to Claim 16, **CHARACTERIZED in that** the optical system comprises a lens (9) interposed between the radiation source (1) and the means (2) for placing the object and capable of forming a quasi-parallel beam, and a collimator (20) appearing as a system of straight capillaries and interposed between the means (2) for placing the object and the image-forming means (4), the radiation source (1), the lens (9), the collimator (20), and the image-forming means (4) being disposed in the same half-space with respect to the means (2) for placing the object.

**25.** A device according to Claim 16, **CHARACTERIZED in that** the optical system comprises the lens (5) interposed between the radiation source (1) and the means (2) for placing the object and adapted for focusing the radiation inside the object, and a collimator (21) appearing as a system of cone-shaped capillaries, said collimator being focused at the same point as the lens (5) and being interposed between the means (2) for placing the object and the image-forming means (4), the lens (5), the collimator (21), and the image-forming means (4) being situated in the same half-space with respect to the means (2) for placing the object and being jointly movable with respect to the means (2) without affecting their mutual arrangement.

**26.** A device according to Claim 16, **CHARACTERIZED in that** the radiation source (1) is capable of forming a quasi-parallel plane-polarized radiation, and the optical system comprises a lens (22) adapted for focusing said plane-polarized radiation and built up of square mono- or polycapillaries, said lens being interposed between the radiation source (1) and the means (2) for placing the object and being adapted for focusing the radiation inside the object, and a lens (23) made up of cone-shaped capillaries and located before the image-forming means (4), said lens (23) having a common focal point with the lens (22) for forming a plane-polarized radiation, and an optical axis situated in the plane of the vector of intensity of the magnetic field of said radiation and arranged square with the optical axis of the lens (22) for focusing said plane-polarized radiation, as well as a lens (24) located on an extension of the optical axis of the lens (22) and having a common focal point therewith, said lens (24) being adapted for forming a quasi-parallel radiation, the additional image-forming means (4') being positioned past the lens (24), while the radiation source (1), all the lenses mentioned above, and both of the image-forming means are jointly movable with respect to the means (2) for placing the object so that their mutual arrangement remains unaffected.

**27.** A lens for converting a flux of neutral or charged particles being established by a set of channels having reflecting walls for radiation transfer by use of multiple total external reflection,
**charaterized in that**

said lens is established by closely packed miniature lenses, wherein each miniature lens consists of a plurality of said radiation transfer channels whose diameters are variable along the lenght of the miniature lens and which define a common single focal point,
the total cross section of each miniature lens is variable along the lenght of said lens and the central axis of each miniature lens is bent, and all or part of the radiation transfer channels are arranged in axial symmetry across the cross-section of said lens.

**28.** A lens according to Claim 27, **CHARACTERIZED in that** the condition of mirror symmetry with respect to one or two mutually square axes of the lens cross-section is satisfied for a set of channels arranged orderly across the lens cross-section.

**29.** A lens according to Claim 28, **CHARACTERIZED in that** the channels thereof have straight longitudinal axes.

**30.** A lens according to Claim 28, **CHARACTERIZED in that** the channels whose longitudinal axis is out of alignment with the axis or if only with one of the lens planes of symmetry in its longitudinal section, are bent so that all the channels spaced equally apart from said axis or said plane and having a cross-section variable lengthwise in accordance with the lens longitudinal profile, are bent equally.

**31.** A lens according to Claim 24, **CHARACTERIZED in that** the condition of central or rotational symmetry with respect to the lens longitudinal axis is satisfied for a set of channels arranged orderly across the lens cross-section.

**32.** A lens according to Claim 31, **CHARACTERIZED in that** the channels thereof have straight longitudinal axes.

**33.** A lens according to Claim 31, **CHARACTERIZED in that** all the channels of the lens save the central channel are bent, and all channels spaced equidistantly apart from the lens longitudinal axis are bent equally, and have their cross-section variable lengthwise the lens in accordance with the longitudinal profile thereof.

**34.** A lens according to any one of Claims 27, 28, and 31, **CHARACTERIZED in that** the channels arranged orderly across the lens cross-section with the observance of axial symmetry, are grouped into a number of similar modules (30) arranged orderly with the observance of axial symmetry.

**35.** A lens according to Claim 34, **CHARACTERIZED in that** each of said modules (30) which are in fact the first-level modules, is formed by second-level modules (31) equal in number and having the same shape and mutual arrangement as the first-level modules.

**36.** A lens according to Claim 34, **CHARACTERIZED in that** apart from said modules which are the first-level modules, it comprises modules of higher levels, and each module of each of the preceding levels is formed by the modules of a next level which are equal in number and have the same shape and mutual arrangement as the first-level modules.

37. A lens according to Claim 34, **CHARACTERIZED in that** the channels thereof have straight longitudinal axes.

38. A lens according to Claim 34, **CHARACTERIZED in that** the channels having their longitudinal axis not aligned with the axis or if only with one of the planes of symmetry of the lens in its longitudinal section, are bent so that all channels spaced equally apart from said axis or said plane of the lens are bent similarly, and have their cross-section variable in accordance with the lens longitudinal profile.

39. A lens according to any one of Claims 29, 32, and 37, **CHARACTERIZED in that** the channels thereof have parallel longitudinal axes.

40. A lens according to any one of Claims 27, 32, and 37, **CHARACTERIZED in that** the channels thereof have a cross-section variable uniformly along the length of the lens.

41. A lens according to Claim 40, **CHARACTERIZED in that** the channels thereof are cone-shaped.

42. A lens according to any one of Claims 30, 33, or 38, **CHARACTERIZED in that** it is shaped as a funnel.

43. A lens according to any one of Claims 30, 33, or 38, **CHARACTERIZED in that** it is shaped as a half-barrel or a symmetrical or asymmetrical barrel.

44. A lens according to Claim 43, **CHARACTERIZED in that** the channels thereof establish a number of layers arranged round the lens longitudinal axis and having the same total cross-sectional areas of the channels belonging to said layers, the bending radii in the bent channels decreasing in the direction from the lens longitudinal axis towards the lens periphery.

45. A lens according to Claim 44, **CHARACTERIZED in that** the channels thereof are established by the inner walls of glass mono- or polycapillaries.

46. A lens according to Claim 45, **CHARACTERIZED in that** the radii of curvature of all bent channels are not in excess of

$$R_c = 2d/\Theta_c^2,$$

where

d    is the channel diameter; and
$\Theta_c$    is the the critical angle of reflection for the lowest-energy particles in the spectrum of the radiation being transferred.

47. A lens according to Claim 45, **CHARACTERIZED in that** the radii of curvature of all bent channels have a minimum value of

$$R_c = 2d/\Theta_c^2,$$

where

d    is the channel diameter; and
$\Theta_c$    is the critical angle of reflection for the highest-energy particles in the spectrum of the radiation being transferred.

48. A lens according to Claim 45, **CHARACTERIZED in that** the radii of curvature of all channels having a bend are inversely proportional to the number of the layer said channels belong to, the number of said layer being counted in the direction from the lens longitudinal axis, and are not in excess of

$$R_c = 2d/\Theta_c^2,$$

Where

d    is the diameter of an individual channel; and
$\Theta_c$    is the critical angle of reflection for the lowest-energy particles in the spectrum of the radiation being transferred.

49. A lens according to Claim 45, **CHARACTERIZED in that** curvature of the bent channels is variable along the length of the lens.

50. A lens according to Claim 49, **CHARACTERIZED in that** the curvature of the channels varies along the lens length mono-tonically.

51. A lens according to any one of Claims 27 through 33, 35 through 38, 41, and 44 through 50, **CHARACTERIZED in that** it comprises channels having helical-shaped reflecting surface.

52. A lens according to Claim 51, **CHARACTERIZED in that** all channels having said helical-shaped surface feature the same hand of helix of the helical surface.

53. A lens according to Claim 51, **CHARACTERIZED in that** it comprises channels, wherein their helical surfaces feature both hands of helix.

54. A lens according to any one of Claims 27 through 33, 35 through 38, 41, 44 through 50, 52, and 53, **CHARACTERIZED in that** coatings are applied to the inner walls of the channels, said coatings having at least one layer and establishing, together with the walls themselves, a multilayer structure featuring different electromagnetic properties of the adjacent layers thereof.

55. A lens according to Claim 54, **CHARACTERIZED in that** the interfaces between at least two adjacent media are in the other phase state compared with their base layer.

56. A lens according to any one of Claims 27 through 33, 35, through 38, 41, 44 through 50, 52, 53, and 55, **CHARACTERIZED in that** diffraction structures having one or more periods are applied to the inner walls of the radiation-transfer channels.

57. A lens according to Claim 34, **CHARACTERIZED in that** each of the modules is in fact a miniature lens.

58. A lens according to any one of claims 27 through 33, 35 through 38, 41, 44 through 50, 52, 53, 55, **CHARACTERIZED in that** the miniature lenses (33) differ from one another in radiation capture angles and focal lengths.

59. A lens according to any one of Claims 27 through 33, 35 through 38, 41, 44 through 50, 52, 53, 55, 57, and 58, **CHARACTERIZED in that** it comprises radiation transfer channels which are randomly arranged across the cross-section thereof and outnumber the orderly arranged channels of the lens.

**Patentansprüche**

1. Vorrichtung zur Erzeugung eines Bildes von einem Objekt mit

einer Strahlungsquelle (1), wobei die Strahlung als Strom von neutralen oder geladenen Teilchen auftritt,
einer Einrichtung (2) zur Anordnung des Objektes mit der Möglichkeit, dem von der genannten Quelle (1) erzeugten Strahlungseffekt ausgesetzt zu sein,
einer Einrichtung (4) zur Bilderzeugung, wobei die genannte Einrichtung (4) in der Lage ist, die Verteilung der Intensität der Strahlung nach deren Wechselwirkung mit dem Objekt aufzuzeichnen und
einem optischen System, das wenigstens eine Linse zum Umwandeln eines Teilchenstroms beinhaltet und sich zwischen der Strahlungsquelle (1) und der Einrichtung (2) zur Anordnung des Objektes befindet oder zwischen der genannten Einrichtung (2) und der Bilderzeugungseinrichtung (4), wobei diese Linse durch eine Gruppe von Durchgängen gebildet wird, die reflektierende Wände zur Strahlungsübertragung mittels vielfacher, totaler Außenreflektion besitzen,

**dadurch gekennzeichnet, dass**

die besagte Linse durch dicht geschichtete Miniaturlinsen gebildet wird, wobei jede Miniaturlinse aus mehreren der genannten Strahlungsdurchgänge besteht, deren Durchmesser in Längsrichtung der Miniaturlinse veränderlich sind und die einen gemeinsamen einzigen Brennpunkt definieren,
der Gesamtquerschnitt jeder Miniaturlinse in Längsrichtung der besagten Linse veränderlich und die Mittelachse jeder Miniaturlinse gekrümmt ist und
alle oder Teil der Strahlungsdurchgänge axialsymmetrisch über den Querschnitt der genannten Linse angeordnet sind.

2. Vorrichtung gemäß Anspruch 1, **dadurch gekennzeichnet, dass** die geordnet über den Linsenquerschnitt angeordneten Durchgänge unter entsprechender Einhaltung der Axialsymmetrie in einer Anzahl sich ähnlicher Module (30) gruppiert sind, die gleichmäßig unter entsprechender Einhaltung der Axialsymmetrie angeordnet sind.

3. Vorrichtung gemäß Anspruch 2, **dadurch gekennzeichnet, dass** die Linse, außer den genannten Modulen (30), die genau gesagt Module der ersten Stufe sind, auch Module (31) höherer Stufen umfasst, wobei jedes Modul der vorhergehenden Stufen von Modulen einer nächsten Stufe gebildet wird mit der gleichen Form, gegenseitigen Anordnung und gleichen Anzahl wie die Module der ersten Stufe.

4. Vorrichtung gemäß Anspruch 2 oder 3, **dadurch gekennzeichnet, dass** jedes der Module der höchsten Stufe eine Miniaturlinse ist.

5. Vorrichtung gemäß einem der Ansprüche 1 bis 3, **dadurch gekennzeichnet, dass** die Bilderzeugungseinrichtung (4) sich in einer solchen Lage befindet, dass die durch das Objekt geleitete Strahlung an die genannte Einrichtung weitergeleitet werden kann.

6. Vorrichtung gemäß Anspruch 5, **dadurch gekenn-**

**zeichnet, dass** das optische System ein Aggregat asymmetrischer Linsen (3) besitzt, die zwischen der Einrichtung (2) zur Anordnung des Objektes und der Bilderzeugungseinrichtung (4) angebracht sind, wobei die genannten Linsen so zusammengesetzt sind, dass sie die aus verschiedenen Bestandteilen des Objektes austretende Strahlung weiterleiten.

7. Vorrichtung gemäß Anspruch 5, **dadurch gekennzeichnet, dass** das optische System eine divergierende Halblinse (7) umfasst, die aus konischen Kapillaren bzw. Polykapillaren aufgebaut ist und sich zwischen der Einrichtung (2) zur Anordnung des Objektes und der Bilderzeugungseinrichtung (4) befindet, um das Bild des Objektes zu vergrößern.

8. Vorrichtung gemäß Anspruch 7, **dadurch gekennzeichnet, dass** sich die Strahlungsquelle (1) am Brennpunkt der divergierenden, aus konischen Kapillaren bzw. Polykapillaren bestehenden Halblinse (7) befindet.

9. Vorrichtung gemäß Anspruch 7, **dadurch gekennzeichnet, dass** die Strahlungsquelle (1) auf der optischen Achse der divergierenden, aus konischen Kapillaren bzw. Polykapillaren bestehenden Halblinse (7) sich in einer außerhalb des Brennpunktes befindlichen Lage befindet.

10. Vorrichtung gemäß Anspruch 7, **dadurch gekennzeichnet, dass** die Strahlungsquelle (1) eine kreisförmige Ausgangsöffnung aufweist, wobei der mittlere Teil abgeschirmt und auf der optischen Achse der divergierenden, aus konischen Kapillaren bzw. Polykapillaren bestehenden Halblinse in der Brennebene der genannten Halblinse angeordnet ist.

11. Vorrichtung gemäß Anspruch 7, **dadurch gekennzeichnet, dass** das optische System ferner eine zweite divergierende, aus konischen Kapillaren bzw. Polykapillaren bestehende Halblinse (7') aufweist, wobei die genannte zweite divergierende Linse im Vergleich zur ersten Linse (7) kleinere Querschnittsabmessungen besitzt und sich zwischen der Strahlungsquelle (1) und der Einrichtung (2) zur Anordnung des Objektes befindet.

12. Vorrichtung gemäß Anspruch 5, **dadurch gekennzeichnet, dass** das optische System eine Linse bzw. Halblinse zur Erzeugung eines quasi parallelen Strahls von Teilchen aufweist, wobei die genannte Linse bzw. Halblinse sich zwischen der Strahlungsquelle und der Einrichtung zur Anordnung des Objektes befindet.

13. Vorrichtung gemäß Anspruch 12, **dadurch gekennzeichnet, dass** die Strahlungsquelle (1) fähig ist, zwei charakteristische $K_\alpha$ Spektrallinien zu erzeugen und dass das optische System auch ein drehbares Filterfenster (8) aufweist, das zwei Wechselsektoren besitzt, von denen jeder zur Unterdrückung der Strahlung jeweils einer der beiden $K_\alpha$ Spektrallinien eingerichtet ist, wobei sich das genannte Filterfenster entweder vor oder hinter der zur Bildung eines quasi parallelen Strahls angepassten Linse bzw. Halblinse befindet, wobei die genannte Linse bzw. Halblinse entweder eine Längsachse mit einer Krümmung zum Abschneiden der harten Strahlungskomponenten besitzt oder eine gerade Längsachse, in welchem Fall ein Satz paralleler Kapillaren (11) zur Anordnung des Objektes vor der Einrichtung (2) angeordnet wird, um die harten Strahlungskomponenten abzuschneiden.

14. Vorrichtung gemäß Anspruch 12, **dadurch gekennzeichnet, dass** die Strahlungsquelle (1) in der Lage ist, zwei charakteristische $K_\alpha$ Spektrallinien zu erzeugen und das optische System ferner eine zweite Linse bzw. Halblinse (9') aufweist, die zur Bildung eines quasi parallelen Strahls, nicht-parallel zum ersten Strahl, angepasst ist, und zwei Kristall-Monochromatoren (12, 12'), die jeweils so eingerichtet sind, dass sie zwischen den beiden $K_\alpha$ Spektrallinien unterscheiden, wobei sich die genannten Kristall-Monochromatoren hinter der genannten Linse bzw. Halblinse befinden, um die monochromatisierten Strahlen in Richtung der Einrichtung (2) zur Anordnung des Objektes zu reflektieren, wobei die Vorrichtung ferner eine Abschirmung (13, 13') aufweist, um zu verhindern, dass die von der Quelle (1) erzeugte Strahlung direkt auf die Einrichtung (2) zur Anordnung des Objektes einfällt, sowie eine zweite Bilderzeugungseinrichtung (4'), wobei sich jede der Bilderzeugungseinrichtungen (4, 4') hinter der Einrichtung (2) zur Anordnung des Objektes befindet, um die Verteilung der Intensität der sich durch das Objekt bewegenden und von einem der Kristall-Monochromatoren (12, 12') reflektierten Strahlung aufzuzeichnen.

15. Vorrichtung gemäß Anspruch 5, **dadurch gekennzeichnet, dass** das optische System eine Linse (5) aufweist, die sich zwischen der Strahlungsquelle (1) und der Einrichtung (2) zur Anordnung des Objektes befindet, wobei die genannte Linse in der Lage ist, die Strahlung innerhalb des Objektes zu fokussieren, wobei die genannte Linse, die Strahlungsquelle (1) und die Bilderzeugungseinrichtung (4) gemeinsam hinsichtlich der Einrichtung (2) zur Anordnung des Objektes drehbar sind ohne ihre gegenseitige Anordnung und die Lage eines Strahlungspunktes (6), der als Zentrum der genannten Drehbewegung den Brennpunkt bildet, zu beeinflussen.

16. Vorrichtung gemäß einem der Ansprüche 1 bis 3, **dadurch gekennzeichnet, dass** die Bilderzeugungseinrichtung so angelegt ist, dass eine in der Materie des Objektes gestreute oder erregte sekundäre Strahlung infolge von Wechselwirkung der genannten Materie mit der von der Quelle erzeugten Strahlung an die genannte Einrichtung weitergeleitet werden kann.

17. Vorrichtung gemäß Anspruch 16, **dadurch gekennzeichnet, dass** die Strahlungsquelle in der Lage ist, einen Strom (16) von Elektronen oder Ionen zum Erregen einer sekundären Röntgen-Strahlung in der Substanz des Objektes (2) zu erzeugen und dass das optische System eine Halblinse (17) aufweist, die so eingerichtet ist, dass sie die genannte sekundäre Strahlung an die Bilderzeugungseinrichtung (4) weiterleitet und in der Lage ist, das Objekt (2) mit dem Brennpunkt der genannten Halblinse abzutasten.

18. Vorrichtung gemäß Anspruch 16, **dadurch gekennzeichnet, dass** das optische System eine Linse (5) zur Übertragung der von der Quelle (1) erzeugten Strahlung an die Einrichtung (2) zur Anordnung des Objektes aufinreist und eine Linse (15) zur Übertragung der sekundären Strahlung an die Bilderzeugungseinrichtung (4), wobei beide der genannten Linsen einen gemeinsamen Brennpunkt besitzen und gemeinsam zwecks Abtastung des Objektes mit ihrem gemeinsamen Brennpunkt bewegbar sind.

19. Vorrichtung gemäß Anspruch 17 oder 18, **dadurch gekennzeichnet, dass** zwischen der Linse (15, 17) zur Übertragung der sekundären Strahlung an die Bilderzeugungseinrichtung (4) und der genannten Einrichtung (4) eine Strahl-Monochromatisierungseinrichtung (12) angelegt ist.

20. Vorrichtung gemäß Anspruch 18, **dadurch gekennzeichnet, dass** zwischen der Linse zur Übertragung der von der Quelle erzeugten Strahlung an die Einrichtung zur Anordnung des Objektes und der genannten Einrichtung ein Polarisierungsprallfläche angelegt wird, wobei diese Prallfläche in der Lage ist, die Richtung des davon reflektierten Strahls hinsichtlich des Strahleinfalls um 90° zu ändern.

21. Vorrichtung gemäß Anspruch 20, **dadurch gekennzeichnet, dass** das Polarisierungsprallfläche ein Kristail-Monochromator ist.

22. Vorrichtung gemäß Anspruch 17 oder 18, **dadurch gekennzeichnet, dass** die Linse zur Übertragung der sekundären Strahlung Strahlungsdurchgänge besitzt, die eine zentrische Symmetrie im Verhältnis zu ihrer optischen Achse aufweisen und in der Lage ist, die Strahlung, die in den Raum zwischen dem Linsenausgang und der Bilderzeugungseinrichtung weitergeleitet wird, zu fokussieren, wobei ein Mikrodiaphragma in dem genannten Raum vorgesehen ist, mit einer Möglichkeit, das genannte Bild abzutasten.

23. Vorrichtung gemäß Anspruch 22, **dadurch gekennzeichnet, dass** das Mikrodiaphragma so angelegt ist, dass seine Öffnung auf der optischen Achse der genannten Linse liegt und um eine unten angegebene Entfernung

$$\Delta f = f\frac{\Delta E}{E}$$

aus dem Brennpunkt verschoben wird, der einer vorgegebenen Energie der weitergeleiteten Teilchen entspricht,
wobei

  $E$ die vorgegebene Energie der Teilchen, die weitergeleitet werden, darstellt;
  $f$ die Brennpunktlänge der genannten Linse in Übereinstimmung mit der genannten Energie ist; und
  $\Delta E$ die erforderliche Höhe der Energieauflösung darstellt.

24. Vorrichtung gemäß Anspruch 16, **dadurch gekennzeichnet, dass** das optische System eine Linse (9) aufweist, die sich zwischen der Strahlungsquelle (1) und der Einrichtung (2) zur Anordnung des Objektes befindet und fähig ist, einen quasi parallelen Strahl zu bilden, und einen Kollimator (20), der als ein System gerader Kapillare auftritt und sich zwischen der Einrichtung (2) zur Anordnung des Objektes und der Bilderzeugungseinrichtung (4) befindet, wobei die Strahlungsquelle (1), die Linse (9), der Kollimator (20) und die Bilderzeugungseinrichtung (4) im gleichen Halbraum hinsichtlich der Einrichtung (2) zur Anordnung des Objektes angeordnet sind.

25. Vorrichtung gemäß Anspruch 16, **dadurch gekennzeichnet, dass** das optische System die zwischen der Strahlungsquelle (1) und der Einrichtung (2) zur Anordnung des Objektes befindliche Linse (5) aufweist und diese so eingerichtet ist, dass sie die Strahlung innerhalb des Objektes fokussiert und einen Kollimator (21), der als ein System kegelförmiger Kapillare auftritt, wobei der genannte Kollimator auf den gleichen Punkt fokussiert ist wie die Linse (5) und sich zwischen der Einrichtung (2) zur Anordnung des Objektes und der Bilderzeugungseinrichtung (4) befindet, wobei die Linse (5), der Kollimator (21) und die Bilderzeugungseinrichtung (4) im gleichen Halbraum im Verhältnis zur Einrichtung (2) zur Anordnung des Objektes angeordnet und in Bezug auf die Einrichtung (2) gemeinsam beweglich sind ohne dass ihre gegenseitige Anordnung beeinflusst wird.

26. Vorrichtung gemäß Anspruch 16, **dadurch gekennzeichnet, dass** die Strahlungsquelle (1) fähig ist, eine quasi parallele, planpolarisierte Strahlung zu erzeugen und das optische System eine Linse (22) aufweist, die so eingerichtet ist, dass sie die genannte planpolarisierte Strahlung fokussiert und aus quadratischen Mono- oder Polykapillaren aufgebaut ist, wobei sich die genannte Linse zwischen der Strahlungsquelle (1) und der Einrichtung (2) zur Anordnung des Objektes befindet und dazu eingerichtet ist, die Strahlung innerhalb des Objektes zu fokussieren und eine Linse (23), die aus kegelförmigen Kapillaren besteht und sich vor der Bilderzeugungseinrichtung (4) befindet, wobei die genannte Linse (23) einen gemeinsamen Brennpunkt mit der Linse (22) zur Bildung einer planpolarisierten Strahlung aufweist und eine optische Achse, die sich in der Ebene des Vektors der Intensität des Magnetfeldes der genannten Strahlung befindet und im rechten Winkel zur optischen Achse der Linse (22) angelegt ist zur Strahlenvereinigung der genannten planpolarisierten Strahlung, sowie eine Linse (24), die sich auf einer Verlängerung der optischen Achse der Linse (22) befindet und die einen gemeinsamen Brennpunkt mit ihr besitzt, wobei die genannte Linse (24) zur Erzeugung einer quasi parallelen Strahlung eingerichtet ist, wobei die zusätzliche Bilderzeugungseinrichtung (4') an der Linse (24) vorbei angelegt ist während die Strahlungsquelle (1), alle oben genannten Linsen und die beiden Bilderzeugungseinrichtungen in Bezug auf die Einrichtung (2) zur Anordnung des Objektes gemeinsam bewegbar sind, so dass ihre gegenseitige Anordnung nicht beeinflusst wird.

27. Linse zum Umwandeln des Stromes von neutralen oder geladenen Teilchen, der durch ein Aggregat von Durchgängen gebildet wird, die reflektierende Wände zur Strahlungsübertragung mittels vielfacher, totaler Außenreflektion aufweisen, **dadurch gekennzeichnet dass**

die genannte Linse durch dicht geschichtete Miniaturlinsen gebildet wird, wobei jede Miniaturlinse aus mehreren der genannten Strahlungsübertragungsdurchgängen besteht, deren Durchmesser in Längsrichtung der Miniaturlinse veränderlich sind und die einen gemeinsamen einzigen Brennpunkt definieren, der Gesamtquerschnitt jeder Miniaturlinse in Längsrichtung der genannten Linse veränderlich und die Mittelachse jeder Miniaturlinse gekrümmt ist und

alle oder Teil der Strahlungsdurchgänge axialsymmetrisch über den Querschnitt der genannten Linse angeordnet sind.

28. Linse gemäß Anspruch 27, **dadurch gekennzeichnet, dass** die Bedingung der Spiegelsymmetrie hinsichtlich einer oder zwei zueinander rechtwinkligen Achsen des Linsenquerschnittes für ein Aggregat von Durchgängen, die geordnet über den Linsenquerschnitt angeordnet sind, erfüllt wird.

29. Linse gemäß Anspruch 28, **dadurch gekennzeichnet, dass** ihre Durchgänge gerade Längsachsen aufweisen.

30. Linse gemäß Anspruch 28, **dadurch gekennzeichnet, dass** die Durchgänge, deren Längsachse nicht mit der Achse fluchtet oder wenn sie nur mit einer der Linsensymmetrieebenen in ihrer Längsrichtung fluchten, gekrümmt sind, so dass alle Durchgänge, die gleich weit von der genannten Achse bzw. Ebene entfernt sind und einen längenmäßig veränderlichen Querschnitt entsprechend dem Linsenlängsprofil haben, ebenfalls gekrümmt sind.

31. Linse gemäß Anspruch 27, **dadurch gekennzeichnet, dass** die Bedingung der zentrischen oder Rotationssymmetrie hinsichtlich der Linsenlängsachse für ein Aggregat von Durchgängen, die gleichmäßig über den Linsenquerschnitt angeordnet sind, erfüllt wird.

32. Linse gemäß Anspruch 31, **dadurch gekennzeichnet, dass** deren Durchgänge gerade Längsachsen aufweisen.

33. Linse gemäß Anspruch 31, **dadurch gekennzeichnet, dass** alle Durchgänge der Linse, mit Ausnahme des mittleren Durchgangs, gekrümmt sind und alle von der Linsenlängenachse gleich weit entfernten Durchgänge ebenfalls gekrümmt sind und einen in Längsrichtung veränderlichen Querschnitt entsprechend dem Linsenlängsprofil haben.

34. Linse gemäß einem der Ansprüche 27, 28, und 31, **dadurch gekennzeichnet, dass** die gleichmäßig über den Linsenquerschnitt unter Einhaltung der Axialsymmetrie angeordneten Durchgänge in eine Anzahl ähnlicher Module (30) gruppiert sind, die gleichmäßig unter Einhaltung der Axialsymmetrie angeordnet sind.

35. Linse gemäß Anspruch 34, **dadurch gekennzeichnet, dass** jedes der genannten Module (3), nämlich die Module der ersten Stufe, von Modulen (31) der zweiten Stufe mit einer gleichen Anzahl und gleichen Form und gegenseitigen Anordnung wie die Module der ersten Stufe gebildet werden.

36. Linse gemäß Anspruch 34, **dadurch gekennzeichnet, dass** sie außer derjenigen Module, welche Module der ersten Stufe sind, auch Module höherer Stufen umfasst und jedes Modul jeder vorhergehenden Stufe von Modulen einer nächsten Stufe gebildet wird mit der gleichen Anzahl, der gleichen Form und gegenseitigen Anordnung wie die Module der ersten Stufe.

37. Linse gemäß Anspruch 34, **dadurch gekennzeichnet, dass** ihre Durchgänge gerade Längsachsen aufweisen.

38. Linse gemäß Anspruch 34, **dadurch gekennzeichnet, dass** die Durchgänge, deren Längsachse nicht mit der Achse fluchtet oder wenn sie nur mit einer der Linsensymmetrieebenen in ihrer Längsrichtung fluchten, gekrümmt sind, so dass alle Durchgänge, die gleich weit von der genannten Achse bzw. Ebene entfernt sind, gleichmäßig gekrümmt sind und einen längenmäßig veränderlichen Querschnitt entsprechend dem Linsenlängsprofil haben.

39. Linse gemäß einem der Ansprüche 29, 32 und 37, **dadurch gekennzeichnet, dass** ihre Durchgänge parallele Längsachsen aufweisen.

40. Linse gemäß einem der Ansprüche 29, 32 und 27, **dadurch gekennzeichnet, dass** ihre Durchgänge einen Querschnitt aufweisen, der in Längsrichtung der Linse gleichmäßig veränderlich ist.

41. Linse gemäß Anspruch 40, **dadurch gekennzeichnet, dass** ihre Durchgänge kegelförmig sind.

42. Linse gemäß einem der Ansprüche 30, 33 oder 38, **dadurch gekennzeichnet, dass** sie trichterförmig ausgebildet ist.

43. Linse gemäß einem der Ansprüche 30, 33 oder 38, **dadurch gekennzeichnet, dass** sie halb-trommelförmig oder in symmetrischer oder asymmetrischer Trommelform ausgebildet ist.

44. Linse gemäß Anspruch 43, **dadurch gekennzeichnet, dass** ihre Durchgänge eine Anzahl von Schichten bilden, die um die Linsenlängsachse angeordnet sind und die die gleichen Gesamtquerschnittsfläche der Durchgänge aufweisen, die zu den genannten Schichten gehören, wobei die Krümmungsradien in den gekrümmten Durchgängen von der Linsenlängsachse in Richtung zum Linsenumfang abnehmen.

45. Linse gemäß Anspruch 44, **dadurch gekennzeichnet**, class ihre Durchgänge von Innenwandungen von Glasmono- oder polykapillaren gebildet werden.

46. Linse gemäß Anspruch 45, **dadurch gekennzeichnet, dass** die Krümmungsradien aller gekrümmter Durchgänge nicht größer sind als

$$R_c = 2d/\theta_c^2,$$

wobei

d den Durchgangsdurchmesser darstellt; und $\theta_c$ den kritischen Reflektionswinkel für die Teilchen mit der niedrigsten Energie im Spektrum der weitergeleiteten Strahlung darstellt.

47. Linse gemäß Anspruch 45, **dadurch gekennzeichnet, dass** die Krümmungsradien aller gekrümmter Durchgänge einen Mindestwert von

$$R_c = 2d/\theta_c^2$$

aufweisen,
wobei

d den Durchgangsdurchmesser darstellt; und $\theta_c$ den kritischen Reflektionswinkel für die Teilchen mit der größten Energie im Spektrum der weitergeleiteten Strahlung darstellt.

48. Linse gemäß Anspruch 45, **dadurch gekennzeichnet, dass** die Krümmungsradien aller Durchgänge, die eine Krümmung aufweisen, umgekehrt proportional zur Anzahl der Schichten sind, zu denen die genannten Durchgänge gehören, wobei die Anzahl der genannten Schichten ab der Linsenlängsachse gezählt wird und nicht größer ist als

$$R_c = 2d/\theta_c^2,$$

wobei

d den Durchmesser eines einzelnen Durchgangs darstellt; und $\theta_c$ den kritischen Reflektionswinkel für die Teilchen mit der niedrigsten Energie im Spektrum der weitergeleiteten Strahlung darstellt.

49. Linse gemäß Anspruch 45, **dadurch gekennzeichnet, dass** die Krümmung der gekrümmten Durchgänge in Längsrichtung der Linse veränderlich ist.

50. Linse gemäß Anspruch 49, **dadurch gekennzeichnet, dass** die Krümmung der Durchgänge sich in Längsrichtung der Linse gleichmäßig verändert.

**51.** Linse gemäß einem der Ansprüche 27 bis 33, 35 bis 38, 41 und 44 bis 50, **dadurch gekennzeichnet, dass** sie Durchgänge mit einer spiralförmig reflektierenden Oberfläche aufweist.

**52.** Linse gemäß Anspruch 51, **dadurch gekennzeichnet, dass** alle Durchgänge mit dieser spiralförmigen Oberfläche, die gleiche Spiralrichtung wie die spiralförmige Oberfläche aufweisen.

**53.** Linse gemäß Anspruch 51, **dadurch gekennzeichnet, dass** sie Durchgänge aufweist, in denen ihre spiralförmigen Flächen in beide Spiralrichtungen zeigen.

**54.** Linse gemäß einem der Ansprüche 27 bis 33, 35 bis 38, 41, 44 50, 52 und 53, **dadurch gekennzeichnet, dass** auf die Innenwandungen der Durchgänge Beschichtungen aufgetragen sind, wobei diese Beschichtungen zumindest aus einer Schicht bestehen und zusammen mit den Wandungen selbst eine vielschichtige Struktur mit unterschiedlichen elektromagnetischen Eigenschaften der daran angrenzenden Schichten bilden.

**55.** Linse gemäß Anspruch 54, **dadurch gekennzeichnet, dass** die Kontaktflächen zwischen zumindest zwei angrenzenden Medien sich im Vergleich zu ihrer Grundschicht im anderen Phasenzustand befinden.

**56.** Linse gemäß einem der Ansprüche 27 bis 33, 35 bis 38, 41, 44 bis 50, 52, 53 und 55, **dadurch gekennzeichnet, dass** Diffraktionsstrukturen mit einer oder mehreren Perioden auf die Innenwandungen der Strahlungsübertragungsdurchgänge aufgebracht werden.

**57.** Linse gemäß Anspruch 34, **dadurch gekennzeichnet, dass** jedes der Module eine Miniaturlinse ist.

**58.** Linse gemäß einem der Ansprüche 27 bis 33, 35 bis 38, 41, 44 bis 50, 52, 53, 55, **dadurch gekennzeichnet, dass** die Miniaturlinsen (33) sich von einiander hinsichtlich Strahlungseinfangwinkeln und Brennweiten unterscheiden.

**59.** Linse gemäß einem der Ansprüche 27 bis 33, 35 bis 38, 41, 44 bis 50, 52, 53, 55, 57 und 58, **dadurch gekennzeichnet, dass** sie Strahlungsdurchgänge umfasst, die willkürlich über deren Querschnitt angeordnet sind und die die geordnet angeordneten Linsendurchgänge zahlenmäßig übertreffen.

## Revendications

**1.** Dispositif destiné à produire l'image d'un objet, comprenant

une source (1) de rayonnement, lequel rayonnement apparaît comme un flux de particules neutres ou chargées,

un moyen (2) pour positionner l'objet avec la possibilité d'être exposé à l'effet du rayonnement produit par ladite source (1),

un moyen (4) de formation d'image, ledit moyen (4) étant capable d'enregistrer la distribution d'intensité de rayonnement après son interaction avec l'objet, et

un système optique incorporant au moins une lentille pour convertir un flux de particules et intercalé entre la source de rayonnement (1) et le moyen (2) de positionnement de l'objet ou entre ledit moyen (2) et le moyen de formation d'image (4), ladite lentille étant établie par un ensemble de canaux comportant des parois réfléchissantes de transfert de rayonnement au moyen d'une réflexion externe totale multiple,

**caractérisé en ce que**

ladite lentille est établie par des lentilles miniatures étroitement empilées, dans lequel chaque lentille miniature est constituée d'une pluralité desdits canaux de transfert de rayonnement dont les diamètres sont variables sur la longueur de la lentille miniature et qui définissent un seul foyer commun,

la section transversale totale de chaque lentille miniature est variable sur la longueur de ladite lentille et l'axe central de chaque lentille miniature est recourbé, et

tous les canaux de transfert de rayonnement ou une partie de ceux-ci sont ou est disposés (ée) selon une symétrie axiale à travers la section transversale de ladite lentille.

**2.** Dispositif selon la revendication 1, **caractérisé en ce que** les canaux disposés de façon ordonnée à travers la section transversale de la lentille tout en respectant de manière prévisible la symétrie axiale sont regroupés en un nombre de modules similaires (30) disposés de façon ordonnée tout en respectant de façon prévisible la symétrie axiale.

**3.** Dispositif selon la revendication 2, **caractérisé en ce que** la lentille comprend également, en plus desdits modules (30) qui sont en fait les modules de premier niveau, des modules (31) de niveaux supérieurs, chaque module de chacun des niveaux précédents étant établi par les modules d'un niveau suivant ayant la même forme, la même disposition mutuelle et en nombre égal aux modules du premier niveau.

4. Dispositif selon la revendication 2 ou 3, **caractérisé en ce que** chacun des modules du niveau le plus haut est en fait une lentille miniature.

5. Dispositif selon l'une quelconque des revendications 1 à 3, **caractérisé en ce que** le moyen de formation d'image (4) est positionné de sorte que le rayonnement transmis à travers l'objet peut être transféré audit moyen.

6. Dispositif selon la revendication 5, **caractérisé en ce que** le système optique comprend un ensemble de lentilles asymétriques (3) intercalées entre le moyen (2) de positionnement de l'objet et le moyen de formation d'image (4), lesdites lentilles étant assemblées de façon à transférer le rayonnement émergeant des différents éléments de l'objet.

7. Dispositif selon la revendication 5, **caractérisé en ce que** le système optique comprend une demi-lentille divergente (7) constituée de capillaires ou polycapillaires coniques et intercalée entre le moyen (2) de positionnement de l'objet et le moyen de formation d'image (4) de façon à agrandir l'image de l'objet.

8. Dispositif selon la revendication 7, **caractérisé en ce que** la source de rayonnement (1) est positionnée au foyer de la demi-lentille divergente (7) constituée de capillaires ou de polycapillaires coniques.

9. Dispositif selon la revendication 7, **caractérisé en ce que** la source de rayonnement (1) est placée sur l'axe optique de la demi-lentille divergente (7) constituée de capillaires ou de polycapillaires coniques à une position hors foyer.

10. Dispositif selon la revendication 7, **caractérisé en ce que** la source de rayonnement (1) comporte une ouverture de sortie de forme circulaire, la partie centrale étant masquée et située sur l'axe optique de la demi-lentille divergente constituée de capillaires ou de polycapillaires coniques, dans le plan focal de ladite demi-lentille.

11. Dispositif selon la revendication 7, **caractérisé en ce que** le système optique comprend également une seconde lentille divergente (7') constituée de capiliaires ou de polycapillaires coniques, ladite seconde lentille divergente présentant une section transversale de dimensions plus petites par rapport à la première lentille (7) et étant intercalée entre la source de rayonnement (1) et le moyen (2) de positionnement de l'objet.

12. Dispositif selon la revendication 5, **caractérisé en ce que** le système optique comprend une lentille ou une demi-lentille destinée à former un faisceau quasi-parallèle de particules, ladite lentille ou demi-lentille étant intercalée entre la source de rayonnement et le moyen de positionnement de l'objet.

13. Dispositif selon la revendication 12, **caractérisé en ce que** la source de rayonnement (1) est capable de former deux lignes spectrales caractéristiques $K_\alpha$ et le système optique comprend également un revolver de filtres rotatif (8) comportant deux secteurs alternés, chacun étant conçu pour supprimer le rayonnement de l'une ou l'autre des lignes spectrales $K_\alpha$, ledit revolver de filtres étant placé soit avant, soit après la lentille ou demi-lentille conçue pour former un faisceau quasi-parallèle, ladite lentille ou demi-lentille possédant soit un axe longitudinal doté d'une courbure pour arrêter la composante de rayonnement pénétrant, soit un axe longitudinal rectiligne, auquel cas un ensemble de capillaires parallèles (11) est placé avant le moyen (2) de positionnement de l'objet afin d'arrêter la composante de rayonnement pénétrant.

14. Dispositif selon la revendication 12, **caractérisé en ce que** la source de rayonnement (1) est capable de former deux lignes spectrales caractéristiques $K_\alpha$, et le système optique comprend également une seconde lentille ou demi-lentille (9') conçue pour former un faisceau quasi-parallèle non parallèle au premier faisceau, et deux monochromateurs à cristaux (12, 12'), chacun étant conçu pour discriminer l'une ou l'autre des deux lignes spectrales $K_\alpha$, lesdits monochromateurs à cristaux étant situés après ladite lentille ou demi-lentille de façon à réfléchir des faisceaux monochromatisés vers le moyen (2) de positionnement de l'objet, le dispositif comprenant également un cache (13, 13') destiné à empêcher le rayonnement produit par la source (1) d'être directement incident sur le moyen (2) de positionnement de l'objet, ainsi qu'un second moyen de formation d'image (4'), chacun des moyens de formation d'image (4, 4') étant situé après le moyen (2) de positionnement de l'objet de façon à enregistrer la distribution d'intensité du rayonnement qui a traversé l'objet et qui a été réfléchi de l'un des monochromateurs à cristaux (12, 12').

15. Dispositif selon la revendication 5, **caractérisé en ce que** le système optique comprend une lentille (5) intercalée entre la source de rayonnement (1) et le moyen (2) de positionnement de l'objet, ladite lentille étant capable de focaliser le rayonnement à l'intérieur de l'objet, ladite lentille, la source de rayonnement (1) et le moyen de formation d'image (4) étant conjointement mobiles en rotation par rapport au moyen (2) de positionnement de l'objet sans affecter leur disposition mutuelle et la position d'un point (6) de focalisation du rayonnement en tant que centre dudit mouvement de rotation.

16. Dispositif selon l'une quelconque des revendications 1 à 3, **caractérisé en ce que** le moyen de formation d'image est positionné de sorte qu'un rayonnement secondaire diffusé ou excité dans la substance de l'objet en raison de l'interaction de ladite substance avec le rayonnement produit par la source peut être transféré audit moyen.

17. Dispositif selon la revendication 16, **caractérisé en ce que** la source de rayonnement est capable de former un flux (16) d'électrons ou d'ions pour exciter un rayonnement secondaire de rayons X dans la substance de l'objet (2), et le système optique comprend une demi-lentille (17) conçue pour transférer ledit rayonnement secondaire au moyen de formation d'image (4) et est capable de balayer l'objet (2) avec le foyer de ladite demi-lentille.

18. Dispositif selon la revendication 16, **caractérisé en ce que** le système optique comprend la lentille (5) destinée à transférer le rayonnement produit par la source (1) au moyen (2) de positionnement de l'objet, et une lentille (15) destinée à transférer le rayonnement secondaire au moyen de formation d'image (4), les deux dites lentilles ayant un foyer commun et étant conjointement mobiles pour balayer l'objet avec leur foyer commun.

19. Dispositif selon la revendication 17 ou la revendication 18, **caractérisé en ce qu'**un moyen de monochromatisation de faisceau (12) est intercalé entre la lentille (15, 17) destinée à transférer le rayonnement secondaire au moyen de formation d'image (4) et ledit moyen (4).

20. Dispositif selon la revendication 18, **caractérisé en ce qu'**une cible de polarisation est intercalée entre la lentille destinée à transférer le rayonnement produit par la source au moyen de positionnement de l'objet et ledit moyen, ladite cible étant capable de changer de 90° la direction du faisceau réfléchi par elle par rapport au faisceau incident sur elle.

21. Dispositif selon la revendication 20, **caractérisé en ce que** la cible de polarisation est en fait un monochromateur à cristaux.

22. Dispositif selon la revendication 17 ou la revendication 18, **caractérisé en ce que** la lentille destinée à transférer le rayonnement secondaire comporte des canaux de transfert de rayonnement présentant une symétrie centrale par rapport à son axe optique et est capable de focaliser le rayonnement transféré dans l'espace situé entre l'extrémité de sortie de lentille et le moyen de formation d'image, un micro-diaphragme étant prévu dans ledit espace avec la possibilité de balayer ladite image.

23. Dispositif selon la revendication 22, **caractérisé en ce que** le micro-diaphragme est positionné de sorte que son ouverture se trouve sur l'axe optique de ladite lentille et est déplacée à une position hors foyer, qui correspond à une énergie préétablie des particules transférées, d'une distance exprimée ci-dessous:

$$\Delta f = f \, \frac{\Delta E}{E}$$

où

E est l'énergie préétablie des particules transférées;
f est la distance focale de ladite lentille, correspondant à ladite énergie; et
$\Delta E$ est le niveau requis de résolution en énergie.

24. Dispositif selon la revendication 16, **caractérisé en ce que** le système optique comprend une lentille (9) intercalée entre la source de rayonnement (1) et le moyen (2) de positionnement de l'objet et capable de former un faisceau quasi-parallèle, et un collimateur (20) apparaissant comme un système de capillaires rectilignes et intercalé entre le moyen (2) de positionnement de l'objet et le moyen de formation d'image (4), la source de rayonnement (1), la lentille (9), le collimateur (20) et le moyen de formation d'image (4) étant disposés dans le même demi-espace par rapport au moyen (2) de positionnement de l'objet.

25. Dispositif selon la revendication 16, **caractérisé en ce que** le système optique comprend la lentille (5) intercalée entre la source de rayonnement (1) et le moyen (2) de positionnement de l'objet et conçue pour focaliser le rayonnement à l'intérieur de l'objet, et un collimateur (21) apparaissant comme un système de capillaires de forme conique, ledit collimateur étant focalisé au même point que la lentille (5) et étant intercalé entre le moyen (2) de positionnement de l'objet et le moyen de formation d'image (4), la lentille (5), le collimateur (21) et le moyen de formation d'image (4) étant situés dans le même demi-espace par rapport au moyen (2) de positionnement de l'objet et étant conjointement mobiles par rapport au moyen (2) sans affecter leur disposition mutuelle.

26. Dispositif selon la revendication 16, **caractérisé en**

**ce que** la source de rayonnement (1) est capable de former un rayonnement polarisé dans le plan quasi-parallèle, et le système optique comprend une lentille (22) conçue pour focaliser ledit rayonnement polarisé dans le plan et constituée de mono- ou polycapillaires carrés, ladite lentille étant intercalée entre la source de rayonnement (1) et le moyen (2) de positionnement de l'objet et étant conçue pour focaliser le rayonnement à l'intérieur de l'objet, une lentille (23) constituée de capillaires de forme conique et située avant le moyen de formation d'image (4), ladite lentille (23) possédant un foyer commun avec la lentille (22) destinée à former un rayonnement polarisé dans le plan, et un axe optique situé dans le plan du vecteur d'intensité du champ magnétique dudit rayonnement et perpendiculaire à l'axe optique de la lentille (22) destinée à focaliser ledit rayonnement polarisé dans le plan, ainsi qu'une lentille (24) située sur un prolongement de l'axe optique de la lentille (22) et possédant un foyer commun avec celle-ci, ladite lentille (24) étant conçue pour former un rayonnement quasi-parallèle, le moyen de formation d'image supplémentaire (4') étant positionné après la lentille (24), tandis que la source de rayonnement (1), toutes les lentilles susmentionnées et les deux moyens de formation d'image sont conjointement mobiles par rapport au moyen (2) de positionnement de l'objet de sorte que leur disposition mutuelle reste inchangée.

27. Lentille destinée à convertir un flux de particules neutres ou chargées, établie par un ensemble de canaux comportant des parois réfléchissantes de transfert de rayonnement au moyen d'une réflexion externe totale multiple,

  **caractérisée en ce que**

  ladite lentille est établie par des lentilles miniatures étroitement empilées, dans laquelle chaque lentille miniature est constituée d'une pluralité desdits canaux de transfert de rayonnement dont les diamètres sont variables sur la longueur de la lentille miniature et qui définissent un seul foyer common,
  la section transversale totale de chaque lentille miniature est variable sur la longueur de ladite lentille et l'axe central de chaque lentille miniature est recourbé, et
  tous les canaux de transfert de rayonnement ou une partie de ceux-ci sont ou est disposés (ée) selon une symétrie axiale à travers la section transversale de ladite lentille.

28. Lentille selon la revendication 27, **caractérisée en ce que** la condition de symétrie spéculaire par rapport à l'un ou aux deux axes mutuellement perpendiculaires de la section transversale de la lentille est satisfaite pour un ensemble de canaux disposés de façon ordonnée à travers la section transversale de la lentille.

29. Lentille selon la revendication 28, **caractérisée en ce que** ses canaux possèdent des axes longitudinaux rectilignes.

30. Lentille selon la revendication 28, **caractérisée en ce que** les canaux dont l'axe longitudinal n'est pas aligné avec l'axe, ou est seulement aligné avec l'un des plans de symétrie de la lentille dans sa section longitudinale, sont recourbés de sorte que tous les canaux équidistants dudit axe ou dudit plan et présentant une section transversale variable dans le sens de la longueur conformément au profil longitudinal de la lentille, présentent des rayons de courbures égaux.

31. Lentille selon la revendication 27, **caractérisée en ce que** la condition de symétrie centrale ou rotationnelle par rapport à l'axe longitudinal de la lentille est satisfaite pour un ensemble de canaux disposés de façon ordonnée à travers la section transversale de la lentille.

32. Lentille selon la revendication 31, **caractérisée en ce que** ses canaux possèdent des axes longitudinaux rectilignes.

33. Lentille selon la revendication 31, **caractérisée en ce que** tous les canaux de la lentille sauf le canal central sont recourbés, tous les canaux équidistants de l'axe longitudinal de la lentille présentent des rayons de courbure égaux, et leur section transversale est variable dans le sens de la longueur de la lentille conformément à son profil longitudinal.

34. Lentille selon l'une quelconque des revendications 27, 28 et 31, **caractérisée en ce que** les canaux disposés de façon ordonnée à travers la section transversale de la lentille tout en respectant la symétrie axiale sont groupés en un nombre de modules similaires (30) disposés de façon ordonnée tout en respectant la symétrie axiale.

35. Lentille selon la revendication 34, **caractérisée en ce que** chacun desdits modules (30), qui sont en fait les modules de premier niveau, est constitué de modules de second niveau (31) en même nombre, de même forme et de même disposition mutuelle que les modules de premier niveau.

36. Lentille selon la revendication 34, **caractérisée en ce qu'**en plus desdits modules qui sont les modules de premier niveau, elle comprend des modules de niveaux supérieurs, et chaque module de chacun des niveaux précédents est constitué des modules d'un niveau suivant en même nombre, de même forme et de même disposition mutuelle que les modules de premier niveau.

**37.** Lentille selon la revendication 34, **caractérisée en ce que** ses canaux possèdent des axes longitudinaux rectilignes.

**38.** Lentille selon la revendication 34, **caractérisée en ce que** les canaux dont l'axe longitudinal n'est pas aligné avec l'axe ou est seulement aligné avec l'un des plans de symétrie de la lentille dans sa section longitudinale sont recourbés de sorte que tous les canaux équidistants dudit axe ou dudit plan de la lentille présentent des rayons de courbure similaires, et leur section transversale est variable conformément au profil longitudinal de la lentille.

**39.** Lentille selon l'une quelconque des revendications 29, 32 et 37, **caractérisée en ce que** ses canaux possèdent des axes longitudinaux parallèles.

**40.** Lentille selon l'une quelconque des revendications 29, 32 et 37, **caractérisée en ce que** ses canaux présentent une section transversale uniformément variable sur la longueur de la lentille.

**41.** Lentille selon la revendication 40, **caractérisée en ce que** ses canaux sont de forme conique.

**42.** Lentille selon l'une quelconque des revendications 30, 33 ou 38, **caractérisée en ce qu'**elle est en forme d'entonnoir.

**43.** Lentille selon l'une quelconque des revendications 30, 33 ou 38, **caractérisée en ce qu'**elle a la forme d'un demi-tonneau ou d'un tonneau symétrique ou asymétrique.

**44.** Lentille selon la revendication 43, **caractérisée en ce que** ses canaux établissent un nombre de couches disposées autour de l'axe longitudinal de la lentille dans lesquelles les aires totales de section transversale des canaux appartenant auxdites couches sont égales, les rayons de courbure des canaux recourbés diminuant dans la direction allant de l'axe longitudinal de la lentille à la périphérie de la lentille.

**45.** Lentille selon la revendication 44, **caractérisée en ce que** ses canaux sont établis par les parois internes de mono- ou de polycapillaires en verre.

**46.** Lentille selon la revendication 45, **caractérisée en ce que** les rayons de courbure de tous les canaux recourbés ne dépassent pas

$$R_c = 2d/\theta_c^2$$

où

d est le diamètre de canal; et

$\theta_c$ est l'angle de réflexion critique des particules de plus faible énergie dans le spectre du rayonnement transféré.

**47.** Lentille selon la revendication 45, **caractérisée en ce que** les rayons de courbure de tous les canaux recourbés ont une valeur minimale de

$$R_c = 2d/\theta_c^2$$

où

d est le diamètre de canal; et
$\theta_c$ est l'angle de réflexion critique des particules de plus forte énergie dans le spectre du rayonnement transféré.

**48.** Lentille selon la revendication 45, **caractérisée en ce que** les rayons de courbure de tous les canaux présentant une courbure sont inversement proportionnels au numéro de la couche à laquelle appartiennent lesdits canaux, le numéro de ladite couche étant compté dans la direction partant de l'axe longitudinal de la lentille, et ne dépassent pas

$$R_c = 2d/\theta_c^2$$

où

d est le diamètre d'un canal individuel; et
$\theta_c$ est l'angle de réflexion critique des particules de plus faible énergie dans le spectre du rayonnement transféré.

**49.** Lentille selon la revendication 45, **caractérisée en ce que** la courbure des canaux recourbés est variable sur la longueur de la lentille.

**50.** Lentille selon la revendication 49, **caractérisée en ce que** la courbure des canaux varie de façon monotone sur la longueur de la lentille.

**51.** Lentille selon l'une quelconque des revendications 27 à 33, 35 à 38, 41 et 44 à 50, **caractérisée en ce qu'**elle comprend des canaux présentant une surface réfléchissante de forme hélicoïdale.

**52.** Lentille selon la revendication 51, **caractérisée en ce que** tous les canaux présentant ladite surface de forme hélicoïdale présentent le même sens d'hélice de surface hélicoïdale.

**53.** Lentille selon la revendication 51, **caractérisée en ce qu'**elle comprend des canaux, dans lesquels leurs surfaces hélicoïdales présentent les deux sens de l'hélice.

**54.** Lentille selon l'une quelconque des revendications 27 à 33, 35 à 38, 41, 44 à 50, 52 et 53, **caractérisée en ce que** des revêtements sont appliqués aux parois internes des canaux, lesdits revêtements comportant au moins une couche et établissant avec les parois elles-mêmes une structure multicouche présentant les différentes propriétés électromagnétiques de ses couches adjacentes.

**55.** Lentille selon la revendication 54, **caractérisée en ce que** les interfaces entre au moins deux milieux adjacents sont à l'autre état de phase par rapport à leur couche de base.

**56.** Lentille selon l'une quelconque des revendications 27 à 33, 35 à 38, 41, 44 à 50, 52, 53 et 55, **caractérisée en ce que** des structures de diffraction comportant une ou plusieurs périodes sont appliquées aux parois internes des canaux de transfert de rayonnement.

**57.** Lentille selon la revendication 34, **caractérisée en ce que** chacun des modules est en fait une lentille miniature.

**58.** Lentille selon l'une quelconque des revendications 27 à 33, 35 à 38, 41, 44 à 50, 52, 53, 55, **caractérisée en ce que** les lentilles miniatures (33) présentent des angles de capture de rayonnement différents les uns des autres et des distances focales différentes les unes des autres.

**59.** Lentille selon l'une quelconque des revendications 27 à 33, 35 à 38, 41, 44 à 50, 52, 53, 55, 57 et 58, **caractérisée en ce qu'**elle comprend des canaux de transfert de rayonnement disposés de façon aléatoire à travers sa section transversale en plus grand nombre que les canaux de lentille disposés de façon ordonnée.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

EP 0 724 150 B1

FIG. 18

FIG. 19

FIG. 20

FIG. 21

FIG. 22

41

FIG. 23

FIG. 24

FIG. 25

FIG. 26

FIG. 27

FIG. 28

FIG. 29

FIG. 30

FIG. 31

FIG. 32

FIG. 33